(19) Europäisches Patentamt
European Patent Office
Office européen des brevets

(11) EP 3 037 455 B1

(12) **EUROPEAN PATENT SPECIFICATION**

(45) Date of publication and mention of the grant of the patent:
**31.10.2018 Bulletin 2018/44**

(21) Application number: **14838508.1**

(22) Date of filing: **21.08.2014**

(51) Int Cl.:
***C08G 65/30*** *(2006.01)*

(86) International application number:
**PCT/JP2014/071920**

(87) International publication number:
**WO 2015/025930 (26.02.2015 Gazette 2015/08)**

(54) **METHOD FOR SEPARATING CARBOXYLIC ACID COMPOUND CONTAINING PERFLUORO(POLY)ETHER GROUP**

VERFAHREN ZUR TRENNUNG EINER CARBONSÄUREVERBINDUNG MIT PERFLUOR(POLY)ETHERGRUPPE

PROCÉDÉ DE SÉPARATION DE COMPOSÉ ACIDE CARBOXYLIQUE CONTENANT UN GROUPE PERFLUORO(POLY)ÉTHER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2013 JP 2013173346**
**04.02.2014 JP 2014019484**

(43) Date of publication of application:
**29.06.2016 Bulletin 2016/26**

(73) Proprietor: **Daikin Industries, Ltd.**
**Osaka-shi, Osaka 566-8585 (JP)**

(72) Inventors:
- **NOMURA, Takashi**
**Osaka-shi**
**Osaka 530-8323 (JP)**
- **MOHARA, Kensuke**
**Osaka 530-8323 (JP)**

(74) Representative: **Hoffmann Eitle**
**Patent- und Rechtsanwälte PartmbB**
**Arabellastraße 30**
**81925 München (DE)**

(56) References cited:

| | |
|---|---|
| **EP-A1- 0 870 778** | **EP-A1- 1 614 703** |
| **EP-A1- 3 037 456** | **EP-A2- 0 538 828** |
| **WO-A1-2005/068534** | **WO-A1-2013/060658** |
| **WO-A1-2014/067981** | **JP-A- 2000 026 593** |
| **JP-A- 2002 069 037** | **JP-A- 2003 026 795** |
| **JP-A- 2003 335 855** | **JP-A- 2009 197 210** |
| **JP-A- 2009 532 432** | **JP-A- 2013 528 682** |
| **US-A1- 2009 118 550** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a method of isolating perfluoro(poly)ether group-containing carboxylic acid compounds.

BACKGROUND ART

It is known that a perfluoro(poly)ether group-containing compound can provide water repellency, oil repellency, an antifouling property, heat resistance, a low temperature property, oil resistance, solvent resistance, chemical resistance, a lubricating property, a low frictional property, abrasion resistance, a mold release property, and the like, that are all excellent. A functional thin film comprising a perfluoro(poly)ether group-containing compound is used in various base materials such as those for, for example, glass, plastic, fiber, metal, and construction materials. A fluorine-based elastomer comprising a perfluoro(poly)ether group-containing compound is used as a material that maintains durability and reliability in a severe environment such as, for example, a car, an airplane, a semiconductor, and the space field. In addition, the perfluoro(poly)ether group-containing compound can provide excellent performance and develop the performance by being used as an intermediate or an additive agent for resins such as an acrylic resin, polyurethane, an epoxy resin, a polyester resin, and a laminate resin, paints, cosmetics, and the like. Searches are energetically executed for approaches of synthesizing perfluoro(poly)ether group-containing compounds having various structures. In the synthesis of each of these perfluoro(poly)ether group-containing compounds, a perfluoro(poly)ether group-containing carboxylic acid compound is an important compound as a raw material compound or an intermediate. Examples of the perfluoro(poly)ether group-containing carboxylic acid compound comprise a perfluoro(poly)ether group-containing monocarboxylic acid compound comprising a carboxylic acid group at only one end thereof, and a perfluoro(poly)ether group-containing dicarboxylic acid compound comprising a carboxylic acid group at each of both ends thereof.

It is generally desired that a raw material compound or an intermediate has a higher degree of purity. This is because, retaining a higher degree of purity causes the purification of the product acquired by a reaction to become easier, enables reduction of production of by-products and unidentified substances that may be produced by the reaction, and enables acquisition of the target substance having more excellent performance. Various discussions have therefore been also held so far for the isolation method of the compound to be used as the raw material compound or the intermediate for the perfluoro(poly)ether group-containing compound.

For example, Japanese Laid-Open Patent Publication No. 6-145339 (Patent Document 1, a corresponding USP: USP No. 5262057) describes a method of isolating one or more non-functional, monofunctional, and bifunctional type(s) of polymer(s) constituting perfluoropolyoxyalkylene. Japanese Laid-Open Patent Publication No. 6-145340 (Patent Document 2, a corresponding USP: USP No. 5246588) describes a method of isolating or incrassating a non-functional, a monofunctional, and a bifunctional types of perfluoropolyoxyalkylene. Japanese Laid-Open Patent Publication No. 10-077341 (Patent Document 3, a corresponding USP: USP No. 5910614) describes a method of isolating a bifunctional polymer having a hydroxyl terminal from a non-functional polymer and/or a monofunctional polymer having a hydroxyl terminal comprised as a mixed substance(s) in perfluoropolyoxyalkylene. Japanese Laid-Open Patent Publication No. 2006-022334 (Patent Document 4, a corresponding EP: EP No. 1614703) describes an isolation method of a bifunctional perfluoropolyether having a $-CH_2OH$ terminal from a mixture of this and a $-CH_2OH$-monofunctional perfluoropolyether.

It is not easy to isolate each of a perfluoro(poly)ether group-containing monocarboxylic acid compound and a perfluoro(poly)ether group-containing dicarboxylic acid compound from a mixture of these compounds. The reasons for this include that, for the perfluoro(poly)ether group-containing monocarboxylic acid compound and the perfluoro(poly)ether group-containing dicarboxylic acid compound differing from each other only in the terminal carboxylic acid group portion, it is difficult to chemically distinguish these compounds from each other.

Patent Documents 1 to 4 describe the isolation methods for various perfluoropolyether compounds. On the other hand, none of Patent Documents 1 to 4 describes any isolation method of a perfluoro(poly)ether group-containing carboxylic acid compound. For this point, the paragraph [0010] of International Patent Publication No. 2009-532432 (Patent Document 5) describes that "It is also known that a monofunctional perfluoropolyether is isolated from a corresponding bifunctional one and a corresponding neutral one using a chromatograph method or adsorption to silica. See, for example, USP No. 5246588, USP No. 5262057, USP No. 5910614, and EP 1614703. These methods however can be used when the functionality of PFPE is alcoholic or amine functionality, and cannot be applied to any carboxylic functionality (see Comparative Examples)." In this description, USP No. 5246588 is the corresponding USP to Patent Document 1, USP No. 5262057 is the corresponding USP to Patent Document 2, USP No. 5910614 is the corresponding USP to Patent Document 3, and EP No. 1614703 is the corresponding EP to Patent Document 4. The paragraph [0056] of Patent Document 5 describes, as "Comparative Example 5 (for a comparison)", that, in isolating a carboxylic monofunctional compound using silica gel, "as suggested in USP No. 5910614, the elution using a mixture of a fluorinated solvent and a polar solvent isolated a neutral component (2.4 g at a yield constant of 96% by weight) while any acid component (a monofunctional and a bifunctional components) was unable to be collected and isolated because the acid component was absorbed by the silica gel column and remained therein."

As described in Patent Documents, those skilled in the art need the method of isolating and purifying a perfluoro(poly)ether group-containing monocarboxylic acid compound and/or a perfluoro(poly)ether group-containing dicarboxylic acid compound from a mixture comprising the perfluoro(poly)ether group-containing carboxylic acid compounds while any effective method thereof has not yet been found. Furthermore, the means itself has not been found of extracting any perfluoro(poly)ether group-containing carboxylic acid compound in the purification method of a mixture comprising a perfluoro(poly)ether group-containing carboxylic acid compound and a perfluoro(poly)ether group-containing compound such as, for example, a perfluoro(poly)ether group-containing diester compound.

The production method of a highly pure monocarboxylic perfluoro(poly)ether described in Patent Document 5 is characterized in that a distilling operation is executed in each of the various processes such as partial fluorination, esterification, and hydrolysis. A heavy load is however imposed in the aspect of the production equipment cost by executing the distilling operations in each of the various processes such as the partial fluorination, the esterification, and the hydrolysis. This method also provides a disadvantage that the production procedure is extremely complicated. Further, a chromatographic method for enriching the difunctional content of (per)fluoropolyether mixtures using supercritical carbon dioxide is disclosed in WO-A-2013/060658.

PRIOR ART DOCUMENTS

PATENT DOCUMENTS

Patent Document 1: Japanese Laid-Open Patent Publication No. 6-145339
Patent Document 2: Japanese Laid-Open Patent Publication No. 6-145340
Patent Document 3: Japanese Laid-Open Patent Publication No. 10-077341
Patent Document 4: Japanese Laid-Open Patent Publication No. 2006-022334
Patent Document 5: International Patent Publication No. 2009-532432

SUMMARY OF THE INVENTION

PROBLEM TO BE SOLVED BY THE INVENTION

The present invention solves the traditional problems and an object thereof is to provide a method of isolating and extracting a perfluoro(poly)ether group-containing carboxylic acid compound.

MEANS FOR SOLVING PROBLEMS

The inventors actively studied a means of excellently isolating and extracting a perfluoro(poly)ether group-containing carboxylic acid compound. As a result, the inventors found that the procedure described below enabled the isolation and extraction of the perfluoro(poly)ether group-containing carboxylic acid compound from a mixture according to a simpler procedure, and were led to the completion of the present invention.

The present invention provides the following aspects.

[1] A method of isolating a perfluoro(poly)ether group-containing compound represented by Formula (1) below; and a perfluoro(poly)ether group-containing monocarboxylic acid compound represented by Formula (2) below or a perfluoro(poly)ether group-containing dicarboxylic acid compound represented by Formula (3) below; from a mixture comprising the perfluoro(poly)ether group-containing compound; and the perfluoro(poly)ether group-containing monocarboxylic acid compound or the perfluoro(poly)ether group-containing dicarboxylic acid compound;
[Chem. 1]

$$A\text{-}Pf\text{-}A \cdots \qquad (1)$$

[Chem. 2]

$$A\text{-}Pf\text{-}Z \cdots \qquad (2)$$

[Chem. 3]

Z-Pf-Z ⋯ (3)

[wherein, in Formulae (1) to (3), the "Pf" group is a perfluoro(poly)ether group represented by

[Chem. 4]

$$-(OCF_2)_a-(OC_2F_4)_b-(OC_3F_6)_c-(OC_4F_8)_d-$$

wherein

"a", "b", "c", and "d" each independently represent an integer equal to or greater than zero and equal to or smaller than 200, wherein the sum of "a", "b", "c", and "d" is at least one, and wherein each of repeating units enclosed in parentheses with "a", "b", "c", or "d" added thereto is present in arbitrary order in the formula, wherein "A"s each independently represent an R'O-CO-W- group, an $R^1$O-CO-W-O- group, an HO-W- group, an HO-W-O- group, an $R^1$-O-W- group, a V- group, or a V-O- group, wherein "$R^1$" represents an alkyl group, "W" represents a bonding hand or a divalent organic group having 1 to 4 carbon atom(s), "V" represents a $C_{1-16}$-perfluoroalkyl group or a group represented by $HCF_2(CF_2)_g$-, and wherein "g" represents an integer of zero to 15, and wherein
"Z" represents an -X-Y group or an -O-X-Y group, wherein "X" represents a bonding hand or a divalent organic group having 1 to 4 carbon atom(s), and "Y" represents a carboxylic acid group], wherein
the method comprises the steps of:

mixing the mixture, a fluorine atom-containing nonpolar solvent, and a polar stationary phase with each other;
isolating the perfluoro(poly)ether group-containing compound from the polar stationary phase using a nonpolar mobile phase; and
isolating the perfluoro(poly)ether group-containing monocarboxylic acid compound or the perfluoro(poly)ether group-containing dicarboxylic acid compound from the polar stationary phase using a polar mobile phase, wherein

the polar stationary phase is selected from the group consisting of aluminum oxide, silica gel, magnesium oxide, aluminum silicate, magnesium silicate, chemically modified silica gel, and diatom earth, wherein
the nonpolar mobile phase comprises one or more fluorine atom-containing nonpolar solvent(s), and wherein
the polar mobile phase comprises one or more fluorine atom-containing polar solvent(s), comprises a combination of a fluorine atom-containing nonpolar solvent and a fluorine atom-containing polar solvent, or comprises a combination of a fluorine atom-containing nonpolar solvent and a fluorine-free polar solvent wherein the fluorine-free polar solvent comprises one or more solvent(s) selected from a carboxylic acid solvent and a sulfonic acid solvent.

[2] A method of isolating a perfluoro(poly)ether group-containing compound represented by Formula (1) below, a perfluoro(poly)ether group-containing monocarboxylic acid compound represented by Formula (2) below, and a perfluoro(poly)ether group-containing dicarboxylic acid compound represented by Formula (3) below from a mixture comprising the perfluoro(poly)ether group-containing compound, the perfluoro(poly)ether group-containing monocarboxylic acid compound, and the perfluoro(poly)ether group-containing dicarboxylic acid compound,
[Chem. 5]

A-Pf-A ⋯ (1)

[Chem. 6]

A-Pf-Z ⋯ (2)

[Chem. 7]

Z-Pf-Z ··· (3)

[wherein the "Pf' group in Formulae (1) to (3) is a perfluoro(poly)ether group represented by

[Chem. 8]

$$-(OCF_2)_a-(OC_2F_4)_b-(OC_3F_6)_c-(OC_4F_8)_d-$$

wherein

"a", "b", "c", and "d" each independently represent an integer equal to or greater than zero and equal to or smaller than 200, wherein the sum of "a", "b", "c", and "d" is at least one, and wherein each of repeating units enclosed in parentheses with "a", "b", "c", or "d" added thereto is present in arbitrary order in the formula, wherein "A"s each independently represent an R'O-CO-W- group, an $R^1$O-CO-W-O- group, an HO-W- group, an HO-W-O- group, an $R^1$-O-W- group, a V- group, or a V-O- group, wherein "$R^1$" represents an alkyl group, "W" represents a bonding hand or a divalent organic group having 1 to 4 carbon atom(s), "V" represents a $C_{1-16}$-perfluoroalkyl group or a group represented by $HCF_2(CF_2)_g$-, and wherein "g" represents an integer of zero to 15, and wherein
"Z" represents an -X-Y group or an -O-X-Y group, wherein "X" represents a bonding hand or a divalent organic group having 1 to 4 carbon atom(s), and "Y" represents a carboxylic acid group], wherein
the method comprises the steps of:

mixing the above mixture, a fluorine atom-containing nonpolar solvent, and a polar stationary phase with each other;
isolating the perfluoro(poly)ether group-containing compound from the polar stationary phase using a nonpolar mobile phase; and
isolating the perfluoro(poly)ether group-containing monocarboxylic acid compound and then the perfluoro(poly)ether group-containing dicarboxylic acid compound from the polar stationary phase using a polar mobile phase, wherein

the polar stationary phase is selected from the group consisting of aluminum oxide, silica gel, magnesium oxide, aluminum silicate, magnesium silicate, chemically modified silica gel, and diatom earth, wherein
the nonpolar mobile phase comprises one or more fluorine atom-containing nonpolar solvent(s), and wherein
the polar mobile phase comprises one or more fluorine atom-containing polar solvent(s), comprises a combination of a fluorine atom-containing nonpolar solvent and a fluorine atom-containing polar solvent, or comprises a combination of a fluorine atom-containing nonpolar solvent and a fluorine-free polar solvent.
wherein the fluorine-free polar solvent comprises one or more solvent(s) selected from a carboxylic acid solvent and a sulfonic acid solvent.

[3] The above method that satisfies a condition that an Rf value of the perfluoro(poly)ether group-containing monocarboxylic acid compound represented by Formula (2) is equal to or greater than 0.1 when the perfluoro(poly)ether group-containing monocarboxylic acid compound is developed using the polar mobile phase as a developing solvent thereof by thin layer chromatography using silica gel as its carrier.
[4] The above method that satisfies a condition that an Rf value of the perfluoro(poly)ether group-containing dicarboxylic acid compound represented by Formula (3) is equal to or greater than 0.1 when the perfluoro(poly)ether group-containing dicarboxylic acid compound is developed using the polar mobile phase as the developing solvent thereof by thin layer chromatography using silica gel as its carrier.
[5] The above method wherein the polar mobile phase is one or more fluorine atom-containing polar solvent(s) or a combination of a fluorine atom-containing nonpolar solvent and a fluorine atom-containing polar solvent.
[6] The above method wherein, in Formulae (1) to (3),
"$R^1$" represents a $C_{1-4}$-alkyl group, wherein "W" and "X" each independently represent a bonding hand, a

$C_{1-4}$-alkylene group, a $C_{1-4}$-fluoroalkylene group, or a $C_{1-4}$-perfluoroalkylene group.

[7] The above method wherein, in Formulae (1) to (3),

the sum of "a", "b", "c", and "d" is equal to or greater than 5 and equal to or smaller than 200.

[8] The above method wherein the average molecular weight of the Pf group in Formulae (1) to (3) is 500 to 100,000.

[9] The above method wherein the fluorine atom-containing nonpolar solvent comprises one or more solvents) selected from the group consisting of chlorofluorocarbon, hydrochlorofluorocarbon, hydrofluoromonoether, perfluoromonoether, perfluoroalkane, hydrofluoroalkane, perfluoropolyether, perfluoroamine, fluorine atom-containing alkene and a fluorine atom-containing aromatic solvent, fluorine atom-containing ketone, and a fluorine atom-containing ester.

[10] The above method wherein the boiling point of the fluorine atom-containing nonpolar solvent is in a range from 20 to 200°C.

[11] The above method wherein the fluorine atom-containing polar solvent comprises one or more solvent(s) selected from the group consisting of a fluorine atom-containing alcohol, a fluorine atom-containing carboxylic acid, and a fluorine atom-containing sulfonic acid.

[12] The above method wherein the boiling point of the fluorine atom-containing polar solvent is in a range from 20 to 200°C.

[13] The above method wherein the fluorine atom-non-containing polar solvent comprises one or more solvent(s) selected from the group consisting of a carboxylic acid solvent, a phenol solvent, and a sulfonic acid solvent.

[14] A method of isolating a perfluoro(poly)ether group-containing compound represented by Formula (1) below; and a perfluoro(poly)ether group-containing monocarboxylic acid compound represented by Formula (2) below; from a mixture comprising the perfluoro(poly)ether group-containing compound and the perfluoro(poly)ether group-containing monocarboxylic acid compound,

[Chem. 9]

A-Pf-A ··· (1)

[Chem. 10]

A-Pf-Z ··· (2)

[wherein, in Formulae (1) and (2), the "Pf" group is a perfluoro(poly)ether group represented by

[Chem. 11]

$$-\left(OCF_2\right)_a-\left(OC_2F_4\right)_b-\left(OC_3F_6\right)_c-\left(OC_4F_8\right)_d-$$

wherein

"a", "b", "c", and "d" each independently represent an integer equal to or greater than zero and equal to or smaller than 200, wherein the sum of "a", "b", "c", and "d" is at least one, and wherein each of repeating units enclosed in parentheses with "a", "b", "c", or "d" added thereto is present in arbitrary order in the formula, wherein "A"s each independently represent an R'O-CO-W- group, an $R^1$O-CO-W-O- group, an HO-W- group, an HO-W-O- group, an $R^1$-O-W- group, a V- group, or a V-O- group, wherein "$R^1$" represents an alkyl group, "W" represents a bonding hand or a divalent organic group having 1 to 4 carbon atom(s), "V" represents a $C_{1-16}$-perfluoroalkyl group or a group represented by $HCF_2(CF_2)_g$-, and wherein "g" represents an integer of zero to 15, and wherein

"Z" represents an -X-Y group or an -O-X-Y group, wherein "X" represents a bonding hand or a divalent organic group having 1 to 4 carbon atom(s), and "Y" represents a carboxylic acid group],

wherein

the method comprises the steps of:

mixing at least one solvent selected from fluorine atom-containing nonpolar solvents, the above mixture, and a polar stationary phase with each other;

isolating the perfluoro(poly)ether group-containing compound and then isolating the perfluoro(poly)ether group-containing monocarboxylic acid compound
from the polar stationary phase using at least one solvent selected from a fluorine atom-containing ketone and a fluorine atom-containing ester, and wherein
the polar stationary phase is selected from the group consisting of aluminum oxide, silica gel, magnesium oxide, aluminum silicate, magnesium silicate, chemically modified silica gel, and diatom earth

[15] The above method wherein
the above mixture is a mixture acquired by hydrolyzing the perfluoro(poly)ether group-containing compound represented by Formula (1) below in the presence of an aqueous solution comprising an alkaline metal hydroxide.
[Chem. 12]

A-Pf-A ··· (1)

[Wherein, in Formula (1), the "Pf' group is a perfluoro(poly)ether group represented by

[Chem. 13]

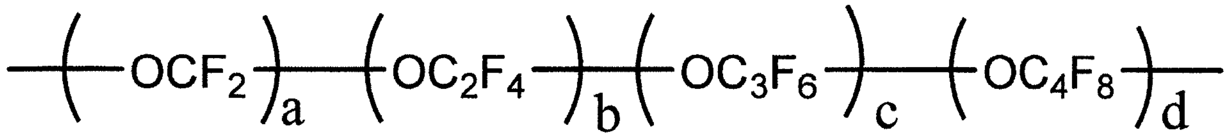

wherein

"a", "b", "c", and "d" each independently represent an integer equal to or greater than zero and equal to or smaller than 200, wherein the sum of "a", "b", "c", and "d" is at least one, and wherein each of repeating units enclosed in parentheses with "a", "b", "c", or "d" added thereto is present in arbitrary order in the formula, and wherein
"A"s each independently represent an R'O-CO-W- group, and an $R^1$O-CO-W-O- group, wherein "$R^1$" represents an alkyl group, and wherein "W" represents a bonding hand or a divalent organic group having 1 to 4 carbon atom(s)].

EFFECT OF THE INVENTION

According to the method of the present invention, a perfluoro(poly)ether group-containing carboxylic acid compound can excellently be isolated from a mixture comprising the perfluoro(poly)ether group-containing carboxylic acid compound. According to the present invention, the perfluoro(poly)ether group-containing carboxylic acid compound can further be extracted from the mixture even under the condition of the room temperature. The method of the present invention provides an advantage that provision is enabled of the perfluoro(poly)ether group-containing monocarboxylic acid compound and/or the perfluoro(poly)ether group-containing dicarboxylic acid compound each in a purer form, that are highly useful in synthesizing perfluoro(poly)ether group-containing compounds having various structures.

BRIEF DESCRIPTION OF DRAWING

Fig. 1 is a model diagram of a chromatogram acquired by thin layer chromatography.

MODES FOR CARRYING OUT THE INVENTION

The present invention relates to a method of isolating a perfluoro(poly)ether group-containing carboxylic acid compound from a mixture comprising the perfluoro(poly)ether group-containing carboxylic acid compound. According to the method of the present invention, a perfluoro(poly)ether group-containing monocarboxylic acid compound and/or a perfluoro(poly)ether group-containing dicarboxylic acid compound can be extracted from the mixture even under the condition of the room temperature. Examples of the perfluoro(poly)ether group-containing carboxylic acid compound of the present invention comprise a perfluoro(poly)ether group-containing monocarboxylic acid compound having a carboxylic acid group at only one end thereof, and a perfluoro(poly)ether group-containing dicarboxylic acid compound

having carboxylic acid groups at both ends thereof.

The method of the present invention is a method of isolating a perfluoro(poly)ether group-containing compound represented by Formula (1) below, and a perfluoro(poly)ether group-containing monocarboxylic acid compound represented by Formula (2) below and/or a perfluoro(poly)ether group-containing dicarboxylic acid compound represented by Formula (3) below from a mixture comprising the perfluoro(poly)ether group-containing compound represented by Formula (1) below; and the perfluoro(poly)ether group-containing monocarboxylic acid compound represented by Formula (2) below and/or the perfluoro(poly)ether group-containing dicarboxylic acid compound represented by Formula (3) below. According to the method of the present invention, the perfluoro(poly)ether group-containing monocarboxylic acid compound and/or the perfluoro(poly)ether group-containing dicarboxylic acid compound can be extracted from the mixture even under the condition of the room temperature.

[Chem. 14]

A-Pf-A ··· (1)

[Chem. 15]

A-Pf-Z ··· (2)

[Chem. 16]

Z-Pf-Z ··· (3)

[Wherein, in Formulae (1) to (3), the "Pf" group is a perfluoro(poly)ether group represented by

[Chem. 17]

$$-(OCF_2)_a-(OC_2F_4)_b-(OC_3F_6)_c-(OC_4F_8)_d-$$

wherein "a", "b", "c", and "d" each independently represent an integer equal to or greater than zero and equal to or smaller than 200, wherein the sum of "a", "b", "c", and "d" is at least one, wherein each of repeating units enclosed in parentheses with "a", "b", "c", or "d" added thereto is present in arbitrary order in the formula, wherein "A"s each independently represent an $R^1$O-CO-W- group, an $R^1$O-CO-W-O- group, an HO-W- group, an HO-W-O- group, an R'-O-W- group, a V- group, or a V-O- group, wherein "$R^1$" represents an alkyl group, "W" represents a bonding hand or a divalent organic group having 1 to 4 carbon atom(s), "V" represents a $C_{1-16}$-perfluoroalkyl group or a group represented by $HCF_2(CF_2)_g$-, and wherein "g" represents an integer of zero to 15, wherein "Z" represents an -X-Y group or an -O-X-Y group, wherein "X" represents a bonding hand or a divalent organic group having 1 to 4 carbon atom(s), and "Y" represents a carboxylic acid group]

Of the repetition units in the Pf group of each of the compounds of Formulae (1) to (3), "$-(OC_4F_8)-$" may be any of $-(OCF_2CF_2CF_2CF_2)-$, $-(OCF(CF_3)CF_2CF_2)-$, $-(OCF_2CF(CF_3)CF_2)-$, $-(OCF_2CF_2CF(CF_3))-$, $-(OC(CF_3)_2CF_2)-$, $-(OCF_2C(CF_3)_2)-$, $-(OCF(CF_3)CF(CF_3))-$, $-(OCF(C_2F_5)CF_2)-$, and $-(OCF_2CF(C_2F_5))-$. Preferably, "$-(OC_4F_8)-$" may be $-(OCF_2CF_2CF_2CF_2)-$.

In Formulae (1) to (3), "W" and "X" each independently represent a bonding hand or a divalent organic group having 1 to 4 carbon atom(s).

The "bonding hand" as used herein means a simple bond having no atom and the like. For example, in case where Z is an -X-Y group, when X is a bonding hand, Z represents a -Y group.

Specific examples of the divalent organic group having 1 to 4 carbon atom(s) include a $C_{1-4}$-alkylene group, a $C_{1-4}$-fluoroalkylene group, a $C_{1-4}$-perfluoroalkylene group, and the like.

Examples of the $C_{1-4}$-alkylene group include $-CH_2-$, $-C_2H_4-$, $-C_3H_6-$, and $-C_4H_8-$. In these examples, $-C_3H_6-$ and $-C_4H_8-$ may each be in the form of a straight chain or may be in the form of a branched chain. Examples of the $C_{1-4}$-fluoroalkylene group include a group formed by partially substituting the hydrogen atoms of the $C_{1-4}$-alkylene group by fluorine atoms. Examples of the $C_{1-4}$-perfluoroalkylene group include a group formed by substituting all the hydrogen atoms of the $C_{1-4}$-alkylene group by fluorine atoms.

Preferably, "X" and "W" each independently are $-CF_2-$, $-CF_2CF_2-$, $-CH_2CF_2-$, $-CF_2CH_2-$, $-CF(CF_3)CF_2-$,

$-CF(CF_3)CH_2-$, $-CF_2CF_2CH_2-$, $-CH_2CF_2CF_2-$, or $-CH_2CF(CF_3)-$.

In Formulae (1) and (2), "$R_1$" may preferably be a $C_{1-4}$-alkyl group. Examples of the $C_{1-4}$-alkyl group include a straight or a branched chain $C_{1-4}$-alkyl group. Specific examples of the $C_{1-4}$-alkyl group include, for example, a methyl group, an ethyl group, an n-propyl group, an isopropyl group, an n-butyl group, a 2-butyl group, an isobutyl group, a t-butyl group, and the like. More preferably, "$R^1$" may be a methyl group or an ethyl group. These alkyl groups may each comprise a substituent group. Examples of the substituent group include, for example, a halogen atom such as a fluorine atom or a chlorine atom, an amino group, a sulfonyl group, and a hydroxyl group.

In Formulae (1) and (2), "V" represents a $C_{1-16}$-perfluoroalkyl group or a group represented by $HCF_2(CF_2)_g$- ("g" represents an integer of zero to 15). The $C_{1-16}$-perfluoroalkyl group is a straight or a branched chain perfluoroalkyl group having one to 16 carbon atom(s), is, preferably, a straight or a branched chain perfluoroalkyl group having one to 3 carbon atom(s), and is, more specifically, $-CF_3$, $-CF_2CF_3$, or $-CF_2CF_2CF_3$.

In Formulae (1) to (3), preferably, "a", "b", "c", and "d" each independently represent an integer equal to or greater than zero and equal to or smaller than 100. The sum of "a", "b", "c", and "d" is, preferably, equal to or greater than 5 and equal to or smaller than 200 and is, more preferably, equal to or greater than 5 and equal to or smaller than 100. In any of the aspects, each of repeating units enclosed in parentheses with "a", "b", "c", or "d" added thereto is present in arbitrary order in the formula.

Examples of one specific aspect of the Pf group in Formulae (1) to (3) include an aspect where the Pf group is $-(OCF_2)_a-(OCF_2CF_2)_b-(OC_3F_6)_c-(OC_4F_8)_d-$ (in this formula, "a" and "b" each independently are equal to or greater than zero and equal to or smaller than 200 provided that the sum of "a" and "b" is equal to or greater than one and, preferably, "a" and "b" each independently are equal to or greater than zero and equal to or smaller than 100 provided that the sum of "a" and "b" is equal to or greater than 10. "c" and "d" each independently are an integer equal to or greater than zero, or equal to or greater than one and equal to or smaller than 30 and, preferably, equal to or greater than zero and equal to or smaller than 10. The sum of "a", "b", "c", and "d" is equal to or greater than 10, is, preferably, equal to or greater than 20, is equal to or smaller than 200, and is, preferably, equal to or smaller than 100. Order of appearance of the repetition units each in parentheses with a suffix "a", "b", "c", or "d" attached thereto is arbitrary in this formula). Examples of more advantageous aspect include an aspect where the Pf group may be a perfluoro(poly)ether group represented by $-(OCF_2)_a-(OCF_2CF_2)_b-(OCF_2CF_2CF_2)_c-(OCF_2CF_2CF_2CF_2)_d-$ (in this formula, "a" to "d" are synonymous with the above, and order of appearance of the repetition units each in parentheses with a suffix "a", "b", "c", or "d" attached thereto is arbitrary in this formula). More preferably, for example, the Pf group may be a perfluoro(poly)ether group represented by $-(OCF_2)_a-(OCF_2CF_2)_b-$ (in this formula, "a" and "b" are synonymous with the above, and order of appearance of the repetition units each in parentheses with a suffix "a" or "b" attached thereto is arbitrary in this formula).

Another specific aspect of the Pf group in Formulae (1) to (3) includes an aspect whose Pf group is a perfluoro(poly)ether group represented by $-(OCF_2CF_aCF_2)_c-$ wherein "c" is equal to or greater than 5 and equal to or smaller than 50. More preferably, "c" is equal to or greater than 10 and equal to or smaller than 30.

The average molecular weight of the Pf group in Formulae (1) to (3) may preferably be 500 to 100,000, more preferably 1,000 to 50,000, and most preferably 1,500 to 20,000. In the present invention, the "average molecular weight" refers to a number average molecular weight and the "average molecular weight" is a value measured using $^{19}F$-NMR.

Advantageous specific examples of the perfluoro(poly)ether group-containing compound represented by Formula (1) include, for example, compounds presented below.

[Table 1]

| | |
|---|---|
| $R^1O$-CO-W-Pf-O-W-CO-O-$R^1$ | (1-a) |
| HO-W-Pf-O-W-OH | (1-b) |
| V-Pf-O-V | (1-c) |
| $R^1$-O-W-Pf-O-W-O-$R^1$ | (1-d) |

In these Formulae, "Pf", "$R^1$" "W", and "V" are defined similarly to the above.

In Formula (1-a), "$R^1$" may preferably be a $C_{1-4}$-alkyl group, and "W" may preferably be $-CF_2-$, $-CF_2CF_2-$, or $-CF(CF_3)-$.

In Formula (1-b), "W" may preferably be $-CH_2CF_2-$, $-CF_2CH_2-$, $-CF_2CF_2CH_2-$, $-CH_2CF_2CF_2-$, $-CF(CF_3)CH_2-$, or $-CH_2CF(CF_3)-$.

In Formula (1-c), "V" may preferably be $-CF_3$, $-CF_2CF_3$, $-CF_2CF_2CF_3$, $-CF_2H$, $-CF_2CF_2H$, or $-CF_2CF_2CF_2H$.

In Formula (1-d), "$R^1$" may preferably be a $C_{1-4}$-alkyl group, and "W" may preferably be $-CF_2-$, $-CF_2CF_2-$, $-CF(CF_3)CF_2-$, $-CH_2CF_2-$, $-CF_2CH_2-$, $-CF_2CF_2CH_2-$, $-CH_2CF_2CF_2-$, $-CF(CF_3)CH_2-$, or $-CH_2CF(CF_3)$.

Advantageous specific examples of the perfluoro(poly)ether group-containing monocarboxylic acid compound

represented by Formula (2) include, for example, compounds presented below.

[Table 2]

| | |
|---|---|
| $R^1$-CO-W-Pf-O-X-Y | (2-a) |
| HO-W-Pf-O-X-Y | (2-b) |
| V-Pf-O-X-Y | (2-c) |
| $R^1$-O-W-Pf-O-X-Y | (2-d) |

In these Formulae, "Pf", "$R^1$", "W", and "V" are defined similarly to the above.

In Formula (2-a), "$R^1$" may preferably be a $C_{1-4}$-alkyl group, "W" may preferably be $-CF_2-$, $-CF_2CF_2-$, or $-CF(CF_3)-$, and "X" may preferably be $-CF_2-$, $-CF_2CF_2-$, or $-CF(CF_3)-$.

In Formula (2-b), "W" is $-CH_2CF_2-$, $-CH_2CF_2CF_2-$, or $-CH_2CF(CF_3)-$, and "X" may preferably be $-CF_2-$, $-CF_2CF_2-$, or $-CF(CF_3)-$.

In Formula (2-c), "V" may preferably be $-CF_3$, $-CF_2CF_3$, $-CF_2CF_2CF_3$, $-CF_2H$, $-CF_2CF_2H$, or $-CF_2CF_2CF_2H$, and "X" may preferably be $-CF_2-$, $-CF_2CF_2-$, or $-CF(CF_3)-$.

In Formula (2-d), "$R^1$" may preferably be a $C_{1-4}$-alkyl group, "W" may preferably be $-CF_2-$, $-CF_2CF_2-$, $-CF(CF_3)CF_2-$, $-CH_2CF_2-$, $-CF_2CH_2-$, $-CF_2CF_2CH_2-$, $-CH_2CF_2CF_2-$, $-CF(CF_3)CH_2-$, or $-CH_2CF(CF_3)-$, and "X" may preferably be $-CF_2-$, $-CF_2CF_2-$, or $-CF(CF_3)-$.

Examples of a reaction to produce a mixture of the perfluoro(poly)ether group-containing compound represented by Formula (1), and the perfluoro(poly)ether group-containing monocarboxylic acid compound represented by Formula (2) and/or the perfluoro(poly)ether group-containing dicarboxylic acid compound represented by Formula (3) include, for example, the following aspects.

- A hydrolysis reaction of the perfluoro(poly)ether group-containing compound represented by Formula (1-a)
- An oxidation reaction of the perfluoro(poly)ether group-containing compound represented by Formula (1-b)
- A fluorination reaction of the perfluoro(poly)ether group-containing dicarboxylic acid compound represented by Formula (3)
- A decarboxylation reaction of the perfluoro(poly)ether group-containing dicarboxylic acid represented by Formula (3)
- A reduction reaction of the perfluoro(poly)ether group-containing dicarboxylic acid represented by Formula (3)
- A decomposition reaction of the perfluoro(poly)ether group-containing compound represented by Formula (1-c)
- An photo-oxidation reaction using tetrafluoroethylene and oxygen, and a decomposition reaction and a hydrolysis reaction of a peroxide acquired thereby
- An oligomerization reaction of tetrafluorooxetane, and a fluorination reaction and a hydrolysis reaction of an oxetane polymer acquired thereby
- A fluorination reaction and a hydrolysis reaction of polyethyleneglycol
- An oligomerization reaction of hexafluoropropyleneoxide, and a hydrolysis reaction of the product acquired thereby

These reactions to produce the mixture can each be executed under the reaction conditions and the like ordinarily used by those skilled in the art.

When the mixture is produced using a hydrolysis reaction of the perfluoro(poly)ether group-containing compound represented by Formula (1 -a), an aspect is more advantageous where the perfluoro(poly)ether group-containing compound represented by Formula (1-a) is hydrolyzed in the presence of an aqueous solution comprising an alkali metal hydroxide.

Examples of the alkali metal hydroxide include, for example, sodium hydroxide, potassium hydroxide, lithium hydroxide, and cesium hydroxide. One of these may be used alone, or 2 or more thereof may concurrently be used. In addition to the alkali metal hydroxide, the aqueous solution may comprise other bases such as calcium hydroxide, barium hydroxide, magnesium hydroxide, strontium hydroxide, and ammonium hydroxide. In this hydrolysis, the base containing the alkali metal hydroxide is preferably used in an amount corresponding to the equivalent number of 0.1 to 1.5 per mole of the perfluoro(poly)ether group-containing compound (2 equivalent in terms of ester group) represented by the Formula (1-a). The equivalent number of the base is more preferably 0.2 to 1.0, most preferably 0.3 to 0.8.

The hydrolysis may be executed in the presence of an organic solvent when necessary. Examples of an advantageous organic solvent include acetonitrile, tetrahydrofuran and the like. The hydrolysis may also be executed in further presence of a dispersing auxiliary agent. Examples of the dispersing auxiliary agent include a fluorine atom-containing solvent and the like that each take a liquid form at -10 to 50°C and that each are poorly soluble or insoluble in water. Perfluorohexane, xylenehexafluoride, and the like are advantageously used each as the fluorine atom-containing

solvent. Each of these fluorine atom-containing solvents may be used alone, or 2 or more thereof may concurrently be used.

Preferably, for the hydrolysis, the reaction is executed by, for example, stirring for 0.5 to 12 hours at -10 to 50°C.

A first aspect of the method of the present invention is a method of isolating the compound of Formula (1) and, the compound of Formula (2) or Formula (3) from a mixture comprising the compound of Formula (1); and the compound of Formula (2) or the compound of Formula (3), wherein

examples of the means for the isolation include filtering, cleansing, extraction, Soxhlet extraction, column chromatography, and the like, wherein

the method comprises the steps of

mixing the mixture; the fluorine atom-containing nonpolar solvent; and the polar stationary phase with each other,

isolating the perfluoro(poly)ether group-containing compound represented by Formula (1) from the polar stationary phase by the isolation means using a nonpolar mobile phase, and

isolating the perfluoro(poly)ether group-containing monocarboxylic acid compound represented by Formula (2) or the perfluoro(poly)ether group-containing dicarboxylic acid compound represented by Formula (3) from the polar stationary phase by the isolation means using a polar mobile phase.

In this method, the polar stationary phase is selected from the group consisting of aluminum oxide, silica gel, magnesium oxide, aluminum silicate, magnesium silicate, chemically modified silica gel, and diatom earth, wherein

the nonpolar mobile phase comprises one or more fluorine atom-containing nonpolar solvent(s), and wherein

the polar mobile phase comprises one or more fluorine atom-containing polar solvent(s), comprises a combination of a fluorine atom-containing nonpolar solvent and a fluorine atom-containing polar solvent, or comprises a combination of a fluorine atom-containing nonpolar solvent and a fluorine-free polar solvent.

wherein the fluorine-free polar solvent comprises one or more solvent(s) selected from a carboxylic acid solvent and a sulfonic acid solvent.

In the method of the present invention, the nonpolar mobile phase is used in first, and the polar mobile phase is then used to isolate the compounds from the polar stationary phase. The perfluoro(poly)ether group-containing compound represented by Formula (1) has a lower polarity compared to that of the perfluoro(poly)ether group-containing monocarboxylic acid compound represented by Formula (2) or the perfluoro(poly)ether group-containing dicarboxylic acid compound represented by Formula (3). The perfluoro(poly)ether group-containing compound represented by Formula (1) has therefore weak retention power to the polar stationary phase and, in isolation using a nonpolar mobile phase (such as, for example, filtering), isolation is executed by elution and the like.

In the present invention, a nonpolar mobile phase comprising one or more fluorine atom-containing nonpolar solvent(s) is used as the nonpolar mobile phase.

In the present invention, any of

- a polar mobile phase comprising one or more fluorine atom-containing polar solvent(s)
- a polar mobile phase comprising a combination of the fluorine atom-containing nonpolar solvent and the fluorine atom-containing polar solvent, and
- a polar mobile phase comprising a combination of the fluorine atom-containing nonpolar solvent and the fluorine atom-non-containing polar solvent

is used as the polar mobile phase. The use of the nonpolar mobile phase and the polar mobile phase enables more excellent isolation of the compound of Formula (1), and the monocarboxylic acid compound of Formula (2) and/or the dicarboxylic acid compound of Formula (3) from the polar stationary phase, and enables extraction of the carboxylic acid compound(s) of Formula (2) and/or Formula (3) even under the condition of the room temperature without needing any heating operation such as a reflux flow. The method of the present invention further has an advantage that provision is enabled of the perfluoro(poly)ether group-containing monocarboxylic acid compound represented by Formula (2) and/or the perfluoro(poly)ether group-containing dicarboxylic acid compound represented Formula (3) each in a purer form, that are/is highly useful in synthesizing perfluoro(poly)ether group-containing compounds having various structures. The isolated compound of Formula (1) can be reused as the raw material of the above hydrolysis reaction.

The "polar stationary phase" herein refers to a stationary phase that is selected from the group consisting of aluminum oxide, silica gel, magnesium oxide, aluminum silicate, magnesium silicate, chemically modified silica gel, and diatom earth and whose stationary phase surface has a polar group such as an -OH group, an amino group, a cyano group, an alkyl group, or a fluoroalkyl group. Examples of silica gel used as the polar stationary phase include, for example, non-modified silica gel, amino group-containing silica gel, and cyano group-containing silica gel.

In the present invention, silica gel may preferably be used as the polar stationary phase.

A commercially available substance may be used as the polar stationary phase. Examples of the commercially available polar stationary phase include, for example, Chromatorex (PSQ-100B) produced by Fuji Cilysia Chemical Ltd., Wakogel(™) C-200 produced by Wako Pure Chemical Industries, Ltd., 115111 Silica Gel 60 produced by Merck, and

the like, that each are silica gel.

The "fluorine atom-containing nonpolar solvent" herein refers to a solvent that is nonpolar or lowly polar and that comprises a fluorine atom(s). Examples of the fluorine atom-containing nonpolar solvent include, for example, a chlorofluorocarbon, a hydrochlorofluorocarbon, a hydrofluoromonoether, a perfluoromonoether, a perfluoroalkane, a hydrofluoroalkane, a perfluoropolyether, a perfluoroamine, a fluorine atom-containing alkene, a fluorine atom-containing aromatic solvent, a fluorine atom-containing ketone, and a fluorine atom-containing ester.

Examples of the chlorofluorocarbon include, for example, chlorofluorocarbon comprising 2 to 4 carbon atoms such as R-113 ($C_2F_3Cl_3$) and 2,2,3,3-tetrachlorohexafluorobutane.

Examples of the hydrochlorofluorocarbon include hydrochlorofluorocarbons each comprising 3 to 6 carbon atoms such as HCFC 225 ($CF_3CF_2CHCl_2$, $CClF_2CF_2CHClF$) and the like.

Examples of the hydrofluoromonoether include hydrofluoromonoethers each comprising 3 to 7 carbon atoms such as, for example, $C_3F_7OCH_3$, $C_4F_9OCH_3$, $C_4F_9OC_2H_5$, $C_2F_5CF(OCH_3)C_3F_7$, $CF_3CH_2OCF_2CHF_2$, $CHF_2CF_2CF_2CF_2CH_2OCH_3$, $CF_3CHFCF_2OCH_2CF_2CHF_2$, $CHF_2CF_2CH_2OCHFCF_3$, $CHF_2OCH_2CF_2CHFCF_3$, $CF_3CHFCF_2OCH_2CF_2CF_3$, $CHF_2OCH_2CF_2OHF_2$, $CF_3CHFCF_2OCH_2CF_3$, $CHF_2CF_2OCH_2CF_2CF_3$, $CF_3CH_2OCH_2CF_3$, $CF_3CH_2OCF_2CHF_2$, $CF_3CHFCF_2OCH_3$, $CHF_2OCH_2CF_2CF_3$, and $HCF_2CF_2OC_4H_9$.

Examples of the perfluoromonoether include perfluoromonoethers each comprising 6 to 10 carbon atoms such as, for example, perfluorodipropylether, perfluorodibutylether, perfluoro-2-trifluoromethyl-4-oxanonane, and perfluorodipentylether.

Examples of the perfluoroalkane include perfluoroalkanes each comprising 3 to 12 carbon atoms such as, for example, perfluorohexane, perfluorooctane, perfluoroundecane, and perfluorododecane.

Example of the hydrofluoroalkane include hydrofluoroalkanes each comprising 3 to 8 carbon atoms such as, for example, $CF_3CH_2CF_2CH_3$, $CF_3CHFCHFC_2F_5$, 1,1,2,2,3,3,4-heptafluorocyclopentane, $CF_3CF_2CF_2CF_2CH_2CH_3$, $CF_3CF_2CF_2CF_2CF_2CF_2CH_2CH_3$, and $CF_3CF_2CF_2CF_2CF_2CHF_2$.

Examples of the perfluoropolyether include perfluoropolyethers each comprising 3 to 10 carbon atoms such as, for example, Galden SV-90, HGalden, ZV100, Galden HT55, Galden HT70, Galden HT90, Galden HT110, Galden HT135, $CF_3OCF_2CF_2OCF_3$, $CF_3OCF_2OCF_2CF_2OCF_3$, $CF_3OCF_2CF_2OCF_2CF_2OCF_3$, $CF_3OCF_2CF_2OCF_2OCF_2CF_2OCF_3$, and $CF_3OCF_2OCF_2CF_2OCF_2CF_2OCF_3$.

Examples of the perfluoroamine include perfluoroamines each comprising 3 to 15 carbon atoms such as, for example, perfluorotriethylamine, perfluorotripropylamine, perfluorotributylamine, and perfluorotriamylamine.

Examples of the fluorine atom-containing alkene include fluorine atom-containing alkenes each comprising 3 to 10 carbon atoms such as, for example, $C_6F_{13}CH=CH_2$, $C_4F_9CH=CH_2$, and $C_8F_{15}CH=CH_2$.

Examples of the fluorine atom-containing aromatic solvent include fluorine atom-containing aromatic solvents each comprising 6 to 12 carbon atoms such as, for example, m-xylenehexafluoride, perfluorobenzene, trifluorobenzene, and monofluorobenzene.

Examples of the fluorine atom-containing ketone include fluorine atom-containing ketones each comprising 2 to 10 carbon atoms such as, for example, methylpentadecafluoroheptylketone, trifluoromethylethylketone, phenylheptafluoropropylketone, methylheptafluoropropylketone, and phenyltrifluoromethylketone.

Examples of the fluorine atom-containing ester include fluorine atom-containing esters each comprising 3 to 10 carbon atoms such as, for example, ethyl trifluoroacetate, methyl trifluoroacetate, $CF_3CF_2COOCH_3$, and $CF_3CF_2COOCH_2CH_3$.

One of these fluorine atom-containing nonpolar solvents may be used alone or 2 or more thereof may concurrently be used.

A commercially available fluorine atom-containing nonpolar solvent may be used as the fluorine atom-containing nonpolar solvent. Examples of the commercially available fluorine atom-containing nonpolar solvent include, for example, hydrofluoromonoethers of Novec(™) series produced by 3M such as, for example, Novec(™) 7000 ($C_3F_7OCH_3$), Novec™ 7100 ($C_4F_9OCH_3$), Novec(™) 7200 ($C_4F_9OC_2H_5$), Novec (™) 7300 ($C_2F_5CF(OCH_3)C_3F_7$, and Novec(™) 711PA;
hydrofluoroethers produced by Asahi Glass Co., Ltd., such as, for example, AE-3000;
hydrofluoroalkanes produced by Asahi Glass Co., Ltd., such as, for example, AC-6000 ($C_6F_{13}C_2H_5$), AC-2000 ($CF_3CF_2CF_2CF_2CF_2CHF_2$), and AC-4000 ($CF_3CF_2CF_2CF_2CH_2CH_3$);
perfluoropolyethers produced by Solvay such as, for example, Galden SV-90, HGalden ZV100, Galden HT55, Galden HT70, Galden HT90, Galden HT110, and Galden HT135;
perfluoroalkanes produced by 3M such as, for example, perfluorohexane, Fluorinert (™) FC-40, Fluorinert(™) FC-72, Fluorinert(™) FC-75, Fluorinert(™) FC-77, Fluorinert(™) FC-84, and Fluorinert(™) FC-104; and
the above chlorofluorocarbon (R-113), the above hydrochlorofluorocarbon (HCFC 225), and the like.

More preferably, the boiling point of each of the fluorine atom-containing nonpolar solvents may be in a range from 20 to 200°C. The presence of the boiling point of the fluorine atom-containing nonpolar solvent in the range from 20 to 200°C provides an advantage that the solvent distilling operation can easily be executed after the compounds are isolated.

The "fluorine atom-containing polar solvent" herein refers to a solvent that is polar and that comprises a fluorine atom(s). Examples of the fluorine atom-containing polar solvent include solvents such as, for example, a fluorine atom-containing alcohol, a fluorine atom-containing carboxylic acid, and a fluorine atom-containing sulfonic acid.

Examples of the fluorine atom-containing alcohol include fluorine atom-containing alcohols each comprising 2 to 10 carbon atoms such as, for example, $CF_3CH_2OH$, $CF_3CF_2CH_2OH$, $CF_3CF_2CF_2CH_2OH$, hexafluoroisopropanol, $HCF_2CF_2CH_2OH$, $HCF_2CH_2OH$, $CF_3CF_2CF_2CF_2CH_2CH_2OH$, $CF_3CF_2CF_2CF_2CF_2CF_2CH_2CH_2OH$, $CF_3CF_2CF_2CH(OH)CH_3$, $CF_3OCF_2CF_2OCF_2CH_2OH$, $CF_3OCF_2CF_2OCF_2OCF_2CH_2OH$, $CF_3OCF(CF_3)CF_2OCF(CF_3)CH_2OH$, $CF_3OCF(CF_3)CF_2OCF_2OCF(CF_3)CH_2OH$, $CF_3C_6H_5OH$, $HOCH_2(CF_2)_6CH_2OH$, and $C_4F_9CH_2CH_2CH_2OH$.

Examples of the fluorine atom-containing carboxylic acid include fluorine atom-containing carboxylic acids each comprising 2 to 10 carbon atoms such as, for example, trifluoroacetic acid, difluoroacetic acid, chlorodifluoroacetic acid, $CF_3CF_2CO_2H$, $CF_3CF_2CF_2CO_2H$, $HO_2C(CF_2)_3CO_2H$, $HO_2C(CF_2)_6CO_2H$, $H(CF_2)_6CO_2H$, $CF_3OCF_2CF_2OCF_2CO_2H$, $CF_3OCF_2CF_2OCF_2OCF_2CO_2H$, $CF_3OCF(CF_3)CF_2OCF(CF_3)CO_2H$, and $CF_3OCF(CF_3)CF_2OCF_2OCF(CF_3)CO_2H$.

Examples of the fluorine atom-containing sulfonic acid include fluorine atom-containing sulfonic acids each comprising one to 10 carbon atom(s) such as trifluoromethane sulfonic acid, pentaflurorooctane sulfonic acid, and perfluoroethoxyethane sulfonic acid.

One of these fluorine atom-containing polar solvents may be used alone, or 2 or more thereof may concurrently be used.

More preferably, the boiling point of each of the fluorine atom-containing polar solvents may be in a range from 20 to 200°C. The presence of the boiling point of the fluorine atom-containing polar solvent in the range from 20 to 200°C provides an advantage that the solvent distilling operation can easily be executed after the compounds are isolated.

It is assumed that the fluorine atom-containing carboxylic acid used as the fluorine atom-containing polar solvent does not comprise any perfluoro(poly)ether group-containing monocarboxylic acid compound represented by Formula (2) and any perfluoro(poly)ether group-containing dicarboxylic acid compound represented by Formula (3).

The fluorine-free solvent refers to a solvent that is polar and that comprises no fluorine atom, that is, a solvent that is polar and that is not any of the above fluorine atom-containing polar solvents and is one or more of solvent(s) selected from the group consisting of the carboxylic acid solvents and the sulfonic acid solvents is/are used as the fluorine atom-non-containing polar solvent.

The fluorine-free polar solvent of the present invention does not comprise any methanol. Methanol is an eluting solvent generally used as a polar mobile phase in column chromatography that uses the polar stationary phase. On the other hand, when a polar mobile phase is used that comprises methanol as the polar solvent, the perfluoro(poly)ether group-containing monocarboxylic acid compound and the perfluoro(poly)ether group-containing dicarboxylic acid compound cannot be isolated and eluted from the polar stationary phase. The present invention is, therefore, characterized in that a polar mobile phase is used that comprises one or more fluorine atom-containing polar solvent(s), that comprises the combination of a fluorine atom-containing nonpolar solvent and the fluorine atom-containing polar solvent, or that comprises a combination of the fluorine atom-containing nonpolar solvent and the fluorine atom-non-containing polar solvent (provided that the fluorine atom-non-containing polar solvent does not contain methanol).

In the present invention, more preferably, at least one selected from hydrochlorofluorocarbons, hydrofluoromonoethers, fluorine atom-containing aromatic solvents, perfluoroalkanes, hydrofluoroalkanes, hydrofluoroalkenes, and perfluoropolyethers, which are a fluorine atom-containing nonpolar solvent, is used and, yet more preferably, at least one selected from hydrofluoromonoethers, fluorine atom-containing aromatic solvents, and hydrofluoroalkanes is used as the nonpolar mobile phase.

Preferably, the polar mobile phase is the one that comprises one or more fluorine atom-containing polar solvent(s) or that comprises a combination of a fluorine atom-containing nonpolar solvent and a fluorine atom-containing polar solvent. Preferably, the fluorine atom-containing nonpolar solvent is at least one selected from hydrochlorofluorocarbons, perfluoroalkanes, hydrofluoromonoethers, and fluorine atom-containing aromatic solvents, and hydrofluoroalkanes. Preferably, the fluorine atom-containing polar solvent is at least one selected from fluorine atom-containing alcohols and fluorine atom-containing carboxylic acids. When the polar mobile phase is the one that comprises the combination of the fluorine atom-containing nonpolar solvent and the fluorine atom-non-containing polar solvent, the fluorine atom-containing nonpolar solvent is, preferably, at least one selected from hydrofluoromonoethers, fluorine atom-containing aromatic solvents, and hydrofluoroalkanes and, preferably, the fluorine atom-non-containing polar solvent is a carboxylic acid solvent.

Examples of more advantageous specific aspects of the polar mobile phase include the following examples.

[Table 3]

| Polar Mobile Phase | Fluorine atom-containing nonpolar solvent (i) | Fluorine atom-containing polar solvent or Fluorine atom-non-containing polar solvent (ii) | Volume Ratio (i)/(ii) |
|---|---|---|---|
| No.1 | - | Fluorine atom-containing carboxylic acid | - |
| No.2 | Hydrofluoromonoether | Fluorine atom-containing alcohol | 1/2~100/1 |
| No.3 | Hydrofluoromonoether | Fluorine atom-containing carboxylic acid | 1/2~100/1 |
| No.4 | Fluorine atom-containing aromatic solvent | Fluorine atom-containing alcohol | 1/2~100/1 |
| No.5 | Perfluoroalkane | Fluorine atom-containing carboxylic acid | 1/2~100/1 |
| No.6 | Hydrofluoroalkane | Fluorine atom-containing alcohol | 1/2~100/1 |
| No.7 | Hydrofluoroalkane | Fluorine atom-containing carboxylic acid | 1/2~100/1 |
| No.8 | Hydrochlorofluorocarbon | Fluorine atom-containing carboxylic acid | 1/2~100/1 |
| No.9 | Hydrofluoromonoether | Carboxylic acid solvent | 1/2~100/1 |
| No.10 | Fluorine atom-containing aromatic solvent | Carboxylic acid solvent | 1/2~100/1 |
| No.11 | Hydrofluoroalkane | Carboxylic acid solvent | 1/2-100/1 |

When the perfluoro(poly)ether group-containing monocarboxylic acid compound represented by Formula (2) and/or the perfluoro(poly)ether group-containing dicarboxylic acid compound represented by Formula (3) are developed using the polar mobile phase as the developing solvent by a thin layer chromatography using silica gel as the carrier, preferably, the polar mobile phase used in the method of the present invention satisfies the condition that the Rf value is equal to or greater than 0.1 of the perfluoro(poly)ether group-containing monocarboxylic acid compound and/or the perfluoro(poly)ether group-containing dicarboxylic acid compound.

The thin layer chromatography is chromatography having a stationary phase of fine powder disposed in a form of a thin layer on a support medium and is performed by using a solvent as a mobile phase. Silica gel is used herein as the stationary phase used for the thin layer chromatography. Examples of the silica gel include, for example, 105715 TLC Glass Plate Silica Gel $60F_{254}$ produced by Merck.

The support medium used in the thin layer chromatography is not especially limited and can properly be selected corresponding to the purpose thereof. Examples of the support medium include, for example, a glass plate, an aluminum sheet, and a plastic sheet.

An example of a specific procedure for the thin layer chromatography is as follows. A silica gel thin layer plate having a longitudinal length of 5 cm is prepared as the stationary phase of the thin layer chromatography. 0.1 g of the perfluoro(poly)ether group-containing monocarboxylic acid compound represented by Formula (2) and/or the perfluoro(poly)ether group-containing dicarboxylic acid compound represented by Formula (3) is dissolved in one ml of the fluorine atom-containing nonpolar solvent (for example, m-xylenehexafluoride) to prepare a sample solution. 2 to 10 μl of the sample solution is spotted using a glass micro capillary at a position 5 mm away from the lower end of the thin layer plate. This spot position is taken as the development starting point (the origin). After spotting the sample solution, the thin layer plate is sufficiently dried by being left untouched and the like.

A developing solvent is put in advance in a developing cabinet for the thin layer chromatography to be 0.2 to 3.5 mm-deep to be left untouched until the vapor of the developing solvent saturates in the developing cabinet.

The thin layer plate with the sample spotted thereon is calmly put in the developing cabinet such that the origin is not directly soaked in the developing solvent. The developing cabinet is closed with its lid and is left untouched until the tip of the solvent ascending on the thin layer plate reaches a position about 5 mm away from the upper end of the thin layer plate.

The thin layer plate is taken out of the developing cabinet and is thereafter heated on a hot plate until the developing solvent is fully dried. The dried thin layer plate is immersed in a 5%-potassium permanganate aqueous solution and is thereafter heated again on the hot plate.

Because the 5%-potassium permanganate aqueous solution is magenta, the immersion of the thin layer plate in this aqueous solution causes the overall thin layer plate to become magenta. On this thin layer plate, due to this operation, the spot(s) become(s) white of the perfluoro(poly)ether group-containing monocarboxylic acid compound represented by Formula (2) and/or the perfluoro(poly)ether group-containing dicarboxylic acid compound represented

by Formula (3).

Fig. 1 is a model diagram of a chromatogram acquired by the thin layer chromatography. The "Rf value" herein of the perfluoro(poly)ether group-containing monocarboxylic acid compound represented by Formula (2) and/or the perfluoro(poly)ether group-containing dicarboxylic acid compound represented by Formula (3) is the value acquired by dividing the distance $L_x$ from the origin to the center of the spot of the compound by the development distance L of the solvent.

$$\text{Rf value} = L_x/L$$

As to the Rf value of each of the perfluoro(poly)ether group-containing monocarboxylic acid compound and the perfluoro(poly)ether group-containing dicarboxylic acid compound, the isolation from the polar stationary phase can be executed when the Rf value is equal to or greater than 0.1. When the development is executed using the polar mobile phase as the developing solvent, the fact that the Rf value of the perfluoro(poly)ether group-containing monocarboxylic acid compound is equal to greater than 0.1 enables the isolation and the extraction of the perfluoro(poly)ether group-containing monocarboxylic acid compound from the polar stationary phase. The fact that the Rf value of the perfluoro(poly)ether group-containing dicarboxylic acid compound is equal to greater than 0.1 enables the isolation and the extraction of the perfluoro(poly)ether group-containing dicarboxylic acid compound from the polar stationary phase. More preferably, the Rf value may be 0.1 to 0.8.

In the present invention, for example, when the hydrofluoromonoether as the fluorine atom-containing nonpolar solvent and the fluorine atom-containing polar solvent are used in combination as the polar mobile phase, the Rf value may be increased compared to the case where the fluorine atom-containing polar solvent is used alone. It is considered that this is because the fluorine atom-containing polar solvent facilitates desorption of the perfluoro(poly)ether group-containing monocarboxylic acid compound represented by Formula (2) and/or the perfluoro(poly)ether group-containing dicarboxylic acid compound represented by Formula (3) from the polar mobile phase while the hydrofluoromonoether as the fluorine atom-containing nonpolar solvent excellently dissolves the perfluoro(poly)ether group-containing monocarboxylic acid compound represented by Formula (2) and/or the perfluoro(poly)ether group-containing dicarboxylic acid compound represented by Formula (3) due to the high affinity of the hydrofluoromonoether with the compounds. The use of the polar mobile phase comprising this combination provides an advantage that the perfluoro(poly)ether group-containing monocarboxylic acid compound and the perfluoro(poly)ether group-containing dicarboxylic acid compound each can more excellently be isolated.

A second aspect of the method of the present invention is a method of isolating the compound of Formula (1), the compound of Formula (2), and the compound of Formula (3) from a mixture comprising the compound of Formula (1), the compound of Formula (2), and the compound of Formula (3), wherein the method comprises the steps of:

mixing the above mixture, the fluorine atom-containing nonpolar solvent, and the polar stationary phase with each other;

isolating the compound of Formula (1) from the polar stationary phase using the nonpolar mobile phase by the isolating means; and

isolating the compound of Formula (2) and then the compound of Formula (3) from the polar stationary phase using the polar mobile phase by the isolating means.

In this method, those as described above can be used such as the polar stationary phase, the nonpolar mobile phase, and the polar mobile phase.

The isolated compound of Formula (1) can be reused as the raw material of the hydrolysis reaction.

In the second aspect, when the combination of the fluorine atom-containing nonpolar solvent and the fluorine atom-containing polar solvent or the combination of the fluorine atom-containing nonpolar solvent and the fluorine atom-non-containing polar solvent is used as the polar mobile phase, each of these solvents may be used whose concentration is varied (with a gradient thereof).

Examples of one advantageous example of the second aspect include an aspect that satisfies a condition that the Rf value of the perfluoro(poly)ether group-containing dicarboxylic acid compound represented by Formula (3) is equal to or greater than 0.1 when the perfluoro(poly)ether group-containing dicarboxylic acid compound represented by Formula (3) is developed using the polar mobile phase as the developing solvent by the thin layer chromatography using silica gel as its carrier. The use of the polar mobile phase satisfying the condition enables excellent isolation of the perfluoro(poly)ether group-containing dicarboxylic acid compound from the polar stationary phase. The Rf value may more preferably be 0.1 to 0.5, preferably, 0.1 to 0.4.

Examples of another one advantageous example of the second aspect include an aspect where the used polar mobile phase is changed corresponding to the isolation stage. For example, when the development is executed using

the polar mobile phase as the developing solvent, the perfluoro(poly)ether group-containing monocarboxylic acid compound represented by Formula (2) can more excellently be isolated by using the polar mobile phase that satisfies the condition that the Rf value of the perfluoro(poly)ether group-containing monocarboxylic acid compound represented by Formula (2) is equal to or greater than 0.1 and the Rf value of the perfluoro(poly)ether group-containing dicarboxylic acid compound represented by Formula (3) is smaller than 0.1. The perfluoro(poly)ether group-containing dicarboxylic acid compound represented by Formula (3) can then be acquired by using the polar mobile phase with which the Rf value of the perfluoro(poly)ether group-containing dicarboxylic acid compound is equal to or greater than 0.1.

In the present invention, the state where "the perfluoro(poly)ether group-containing monocarboxylic acid compound represented by Formula (2) and the perfluoro(poly)ether group-containing dicarboxylic acid compound represented by Formula (3) are isolated" refers to the state where the compounds are extracted in the following state. For example, the state where "the monocarboxylic acid compound is isolated and extracted" refers to the fact that the mol ratios of the monocarboxylic acid compounds are increased than those of the compounds before the isolation when the compounds are isolated and extracted from the mixture using the method of the present invention, and refers to the state where the mol ratios are, preferably, in a range of the monocarboxylic acid:dicarboxylic acid=100:0 to 90:10 and are, more preferably, in a range of 100:0 to 99:1. For example, the state where "the dicarboxylic acid compound is isolated and extracted" refers to the fact that the mol ratio of the dicarboxylic acid compound is increased than that of the compound before the isolation when the compound is isolated and extracted from the mixture using the method of the present invention, and refers to the state where the mol ratios are, preferably, in a range of the monocarboxylic acid:dicarboxylic acid=0:100 to 10:90 and are, more preferably, in a range of 0:100 to 1:99.

A third aspect of the method of the present invention is a method of isolating the compound of Formula (1) and the compound of Formula (2) from a mixture comprising the compound of Formula (1) and the compound of Formula (2), wherein
the method comprises the steps of:

mixing at least one solvent selected from fluorine atom-containing nonpolar solvents, the above mixture, and the polar stationary phase with each other; and
isolating the compound of Formula (1) and then the compound of Formula (2) from the polar stationary phase by the isolating means using at least one solvent selected from the fluorine atom-containing ketones and the fluorine atom-containing esters.

In this method, the polar stationary phase and the fluorine atom-containing nonpolar solvent as above can be used.

The third aspect is characterized in that the at least one solvent selected from the fluorine atom-containing ketones and the fluorine atom-containing esters is used as the solvent to isolate the compound of Formula (1) and the compound of Formula (2) from the polar stationary phase. The fluorine atom-containing ketones and the fluorine atom-containing esters are both solvents classified herein as the fluorine atom-containing nonpolar solvents. On the other hand, the fluorine atom-containing ketones and the fluorine atom-containing esters are both not fully nonpolar and can be classified as low polar solvents. These solvents each have a capability to isolate (for example, to elute) the perfluoro(poly)ether group-containing monocarboxylic acid compound due to the low polarity thereof. The use of the fluorine atom-containing ketone and/or the fluorine atom-containing ester from the start as the solvent for the isolation from the polar stationary phase enables the stepwise isolation of the compound of Formula (1) and the compound of Formula (2) and, as a result, the compound of Formula (1) and the compound of Formula (2) can be isolated and extracted. The isolated compound of Formula (1) can be reused as the raw material of the above hydrolysis reaction.

In the third aspect, when the compound of Formula (3) is further comprised in the mixture for the isolation, the compound of Formula (1), the compound of Formula (2), and the compound of Formula (3) may be isolated and extracted by isolating the compound of Formula (1) and the compound of Formula (2) and, thereafter, isolating the compound of Formula (3) using a polar solvent having a higher elution capability such as a fluorine atom-containing carboxylic acid, a fluorine atom-containing alcohol, and/or a fluorine atom-containing sulfonic acid.

[Examples]

The present invention will be described in more detail with reference to Examples below while the present invention is not limited by Examples. In Examples, unless otherwise described, "part" and "%" are based on weight. In Examples, order of appearance of the repetition units of ($CF_2O$), ($CF_2CF_2O$), ($CF(CF_3)CF_2O$), ($CF_2CF_2CF_2O$), ($CF_2CF(CF_3)O$), and ($CF_2CF_2CF_2CF_2O$) constituting the perfluoropolyether is arbitrary. All of the chemical formulae presented below each represent the average composition.

Examples 1 to 26 and Comparative Examples 1 to 13 (Examples 1-26 are referential)

A silica gel thin layer plate (produced by Merck, 105715 TLC glass plate silica gel $60F_{254}$) having a longitudinal length of 5 cm and a lateral length of 1.5 cm was prepared as the stationary phase of the thin layer chromatography.

0.1 g of $CF_3CF_2CF_2O(CF_2CF_2O)_{20}CF_2CF_2CO_2H$ as the perfluoro(poly)ether group-containing monocarboxylic acid compound and 0.1 g of $HO_2CCF_2CF_2O(CF_2CF_2CF_2O)_{20}CF_2CF_2CO_2H$ as the perfluoro(poly)ether group-containing dicarboxylic acid compound were dissolved in 1 ml of m-xylenehexafluoride as the fluorine atom-containing nonpolar solvent to prepare a sample liquid.

The acquired sample liquid was spotted by an amount of 2 to 10 μl using a glass micro capillary at a position 5 mm away from the lower end of the silica gel thin layer plate, and was dried. This spot position was taken as the development starting point (the origin).

The polar mobile phase presented in Table below as the developing solvent was put in advance in a developing cabinet for the thin layer chromatography to be 2 to 3 mm deep to be left untouched until the vapor of the developing solvent saturated the developing cabinet.

The thin layer plate with the sample spotted thereon was calmly put in the developing cabinet such that the origin was not directly soaked in the developing solvent. The developing cabinet was closed with its lid and was left untouched until the tip of the solvent ascending on the thin layer plate reached the position about 5 mm away from the upper end of the thin layer plate.

The thin layer plate was taken out of the developing cabinet and was thereafter heated on a hot plate to sufficiently dry the developing solvent. The dried thin layer plate was immersed in a 5%-potassium permanganate aqueous solution and was thereafter heated again on the hot plate.

The immersion of the thin layer plate in this 5%-potassium permanganate aqueous solution caused the overall thin layer plate to become magenta. On this thin layer plate, the spot of the perfluoro(poly)ether group-containing monocarboxylic acid compound and the perfluoro(poly)ether group-containing dicarboxylic acid compound appeared as a white spot. The center was marked of the white spot of the perfluoro(poly)ether group-containing monocarboxylic acid compound and the perfluoro(poly)ether group-containing dicarboxylic acid compound. The Rf value was acquired by dividing the distance $L_x$ from the origin to the center of the spot by the development distance L.

[Table 4]

| | Constitution of Polar Mobile Phase | | | Rf Value | | Evaluation of Isolation State |
|---|---|---|---|---|---|---|
| | Fluorine A tom-Containing Nonpolar Solvent (i) | Fluorine Atom-Containing Polar Solvent or Fluorine Atom-Non-Containing Polar Solvent (ii) | Volume Ratio (i)/(ii) | Monocarboxylic Acid | Dicarboxylic Acid | |
| Example 1 | $CF_3CO_2CH_2CH_3$ | - | - | 0.1 | 0 | ○ |
| Example 2 | Methylpentadeca-flooroheptylketone | - | - | 0.1 | 0 | ○ |
| Example 3 | $CF_3CF_2COOCH_3$ | - | - | 0.18 | 0 | ○ |
| Example 4 | - | $CF_3CO_2H$ | - | 0.2 | 0.2 | ○ |
| Example 5 | AC-6000 | $CF_3CH_2OH$ | 2/1 | 0.5 | 0 | ◎ |
| Example 6 | $C_6F_6$ | $CF_3CH_2OH$ | 2/1 | 0.23 | 0 | ○ |
| Example 7 | Novec7100 | $CF_3CH_2OH$ | 2/1 | 0.10 | 0 | ○ |
| Example 8 | Novec7200 | $(CF_3)_2CHOH$ (HFIP) | 2/1 | 0.17 | 0.02 | ○ |
| Example 9 | Novec7200 | $CF_3CH_2OH$ | 1/2 | 0.38 | 0.12 | ○ |
| Example 10 | Novec7200 | $CF_3CH_2OH$ | 1/1 | 0.36 | 0.03 | ○ |
| Example 11 | Novec7200 | $CF_3CH_2OH$ | 2/1 | 0.3 | 0 | ◎ |
| Example 12 | Novec7200 | $CF_3CF_2CH_2OH$ (5FP) | 2/1 | 0.35 | 0.05 | ○ |
| Example 13 | Novec7200 | $CF_3CO_2H$ | 2/1 | 0.45 | 0.28 | ○ |
| Example 14 | Novec7200 | $CF_3CO_2H$ | 3/1 | 0.63 | 0.38 | ○ |
| Example 15 | Novec7200 | $CF_3CO_2H$ | 5/1 | 0.63 | 0.5 | ○ |
| Example 16 | Novec7200 | $CF_3CO_2H$ | 10/1 | 0.5 | 0.3 | ○ |
| Example 17 | mXHF | $CF_3CH_2OH$ | 2/1 | 0.1 | 0 | ○ |
| Example 18 | mXHF | $CF_3CF_2CH_2OH$ (5FP) | 2/1 | 0.1 | 0 | ○ |
| Example 19 | mXHF | $(CF_3)_2CHOH$ (HFIP) | 2/1 | 0.1 | 0 | ○ |
| Example 20 | mXHF | $CF_3CO_2H$ | 2/1 | 0.55 | 0.2 | ○ |
| Example 21 | Novec7300 | $CF_3CH_2OH$ | 2/1 | 0.54 | 0 | ◎ |
| Example 22 | Novec7300 | $CH_3CO_2H$(Acetic acid) | 5/1 | 0.21 | 0.05 | ○ |

(continued)

| | Constitution of Polar Mobile Phase | | | Rf Value | | Evaluation of Isolation State |
|---|---|---|---|---|---|---|
| | Fluorine A tom-Containing Nonpolar Solvent (i) | Fluorine Atom-Containing Polar Solvent or Fluorine Atom-Non-Containing Polar Solvent (ii) | Volume Ratio (i)/(ii) | Monocarboxylic Acid | Dicarboxylic Acid | |
| Example 23 | $C_6F_{14}$ | $CF_3CO_2H$ | 5/1 | 0.75 | 0.49 | ○ |
| Example 24 | $C_6F_{13}CH{=}CH_2$ | $CF_3CH_2OH$ | 2/1 | 0.5 | 0 | ◎ |
| Example 25 | Galden SV-90 | $CF_3CO_2H$ | 5/1 | 0.61 | 0.36 | ○ |
| Example 26 | HCFC225 | $CF_3CH_2OH$ | 2/1 | 0.23 | 0.01 | Δ |
| Comparative Example 1 | $C_6F_{14}$ | - | - | 0 | 0 | × |
| Comparative Example 2 | 365mfc | - | - | 0 | 0 | × |
| Comparative Example 3 | AE3000 | - | - | 0 | 0 | × |
| Comparative Example 4 | $C_6F_{13}CH{=}CH_2$ | - | - | 0 | 0 | × |
| Comparative Example 5 | Galden SV-90 | - | - | 0 | 0 | × |
| Comparative Example 6 | HCFC225 | - | - | 0 | 0 | × |
| Comparative Example 7 | Novec7200 | - | - | 0 | 0 | × |
| Comparative Example 8 | mXHF | - | - | 0 | 0 | × |
| Comparative Example 9 | Zeorora H | - | - | 0 | 0 | × |
| Comparative Example 10 | Novec7200 | MeOH | 1/1 | 0 | 0 | × |
| Comparative Example 11 | Novec7200 | MeOH | 3/1 | 0 | 0 | × |

(continued)

| | Constitution of Polar Mobile Phase | | | Rf Value | | Evaluation of Isolation State |
|---|---|---|---|---|---|---|
| | Fluorine A tom-Containing Nonpolar Solvent (i) | Fluorine Atom-Containing Polar Solvent or Fluorine Atom-Non-Containing Polar Solvent (ii) | Volume Ratio (i)/(ii) | Monocarboxylic Acid | Dicarboxylic Acid | |
| Comparative Example 12 | mXHF | MeOH | 3/1 | 0 | 0 | × |
| Comparative Example 13 | - | MeOH | - | 0 | 0 | × |

The descriptions of the solvents and the like in the above Table are as follows.

Non-Polar Solvents

AC-6000: $CF_3CF_2CF_2CF_2CF_2CF_2CH_2CH_3$
Zeorora H: Heptafluorocyclopentane
$C_6F_{14}$: Perfluorohexane
Galden SV-90: $CF_3O(CF(CF_3)CF_2O)_m(CF_2O)_nCF_3$
HCFC-225: $CF_3CF_2CHCl_2$
365mfc: $CF_3CH_2CF_2CH_3$
Vertrel XF: $CF_3CHFCHFC_2F_5$
Novec(™) 7100: $C_4F_9OCH_3$
Novec(™) 7200: $C_4F_9OC_2H_5$
Novec(™) 7300: $C_2F_5CF(OCH_3)CF(CF_3)_2$
AE-3000: $CF_3CH_2OCF_2CHF_2$
$C_6F_{13}CH=CH_2$: $C_6F_{13}CH=CH_2$
m-XHF: m-xylenehexafluoride
$C_6F_6$: perfluorobenzene ($C_6F_6$)
Ethyl Trifluoroacetate: $CF_3CO_2C_2H_5$
Methylpentadecafluoroheptylketone: $C_7F_{15}COCH_3$

Polar Solvents

Trifluoroethanol: $CF_3CH_2OH$
5FP: $CF_3CF_2CH_2OH$
Hexafluoroisopropanol: $(CF_3)_2CHOH$
Trifluoromethane Sulfonic Acid: $CF_3SO_3H$
Trifluoroacetic Acid: $CF_3CO_2H$
MeOH: Methanol

The evaluation of the isolation state was executed by visual observation based on the following criteria.

◎: Separation was recognized between the spot of the monocarboxylic acid compound and the spot of the dicarboxylic acid compound.
○: An overlapping portion was recognized between the spot of the monocarboxylic acid compound and the spot of the dicarboxylic acid compound.
Δ: The spot of the monocarboxylic acid compound and the spot of the dicarboxylic acid compound were slightly separated from each other.
×: The spot of the monocarboxylic acid compound and the spot of the dicarboxylic acid compound were not separated at all from each other.

As described in Examples, when each of the polar mobile phases presented in Examples were used in the development as the developing solvent, the Rf value(s) was/were equal to or greater than 0.1 of the perfluoro(poly)ether group-containing monocarboxylic acid compound and/or the perfluoro(poly)ether group-containing dicarboxylic acid compound. This shows that the polar mobile phases presented in Examples had the capability to isolate the perfluoro(poly)ether group-containing monocarboxylic acid compound and/or the perfluoro(poly)ether group-containing dicarboxylic acid compound from the polar stationary phase.

Especially, when the polar mobile phase was used that was the combination of the hydrofluoromonoether (Novec(™) 7200) as the fluorine atom-containing nonpolar solvent and the fluorine atom-containing carboxylic acid ($CF_3COOH$) as the fluorine atom-containing polar solvent, the Rf values were higher for both of the perfluoro(poly)ether group-containing monocarboxylic acid compound and the perfluoro(poly)ether group-containing dicarboxylic acid in case where the fluorine atom-containing nonpolar solvent/the fluorine atom-containing polar solvent equals 3/1 than the case where the fluorine atom-containing nonpolar solvent/the fluorine atom-containing polar solvent equals 2/1. When the polar stationary phase such as silica gel is used, polar compounds such as the perfluoro(poly)ether group-containing

monocarboxylic acid compound and the perfluoro(poly)ether group-containing dicarboxylic acid each generally tend to present a higher Rf value in case where a higher-polar mobile phase is used. In Examples of the present invention, however, it is shown that the Rf values were increased even when the polar mobile phase was used that comprised a more amount of fluorine atom-containing nonpolar solvent, that is, whose polarity was not so high. As above, for the method of the present invention, as to the combination of the polar solvent and the nonpolar solvent, it can be seen that not only the suitable polarity of each solvent but also a more suitable combination is present for the isolation of the perfluoro(poly)ether group-containing monocarboxylic acid compound and the perfluoro(poly)ether group-containing dicarboxylic acid.

On the other hand, as described in Comparative Examples 1 to 9, when only the fluorine atom-containing nonpolar solvent was used as the developing solvent, the Rf values were both smaller than 0.1 of the perfluoro(poly)ether group-containing monocarboxylic acid compound and the perfluoro(poly)ether group-containing dicarboxylic acid.

As described in Comparative Examples 10 to 13, when methanol was used as the polar solvent, the Rf value was zero for both of the Experiment Example using methanol alone as the developing solvent and Experiment Example using a hydrofluoromonoether and methanol in combination as the developing solvent. Methanol is a polar solvent generally used widely as the eluting solvent in chromatography. It can be seen however that methanol is not a solvent suitable for isolation of the perfluoro(poly)ether group-containing monocarboxylic acid compound and the perfluoro(poly)ether group-containing dicarboxylic acid.

Example 27

7 g of a perfluoro(poly)ether carboxylic acid mixture represented by the average compositions of $CF_3CF_2CF_2O(CF_2CF_2CF_2O)_{20}CF_2CF_2CO_2H$, $HO_2CCF_2CF_2O(CF_2CF_2CF_2O)_{20}CF_2CF_2CO_2H$, and $CF_3CF_2CF_2O(CF_2CF_2CF_2O)_{20}CF_2CF_2CF_3$, 35 ml of perfluorohexane, and 20 g of silica gel (produced by Fuji Cilysia Chemical Ltd., PSQ-100B) were put in a 50-ml three-neck flask having a thermometer and a stirrer attached thereto and stirred at 25°C for 1 hour. The silica gel in the reaction liquid was thereafter filtered using Celite, and the silica gel was cleansed using 100 ml of perfluorohexane. The filtrate was incrassated at a reduced pressure to acquire 1.69 g (24.1%) of $CF_3CF_2CF_2O(CF_2CF_2CF_2O)_{20}CF_2CF_2CF_3$.

The silica gel was continuously cleansed using 100 ml of Novec(™) 7200/$CF_3CH_2OH$ (6/4). The filtrate was incrassated at a reduced pressure to acquire 4.53 g (64.7%) of $CF_3CF_2CF_2O(CF_2CF_2CF_2O)_{20}CF_2CF_2CO_2H$. The silica gel was finally cleansed using 200 ml of Novec(™) 7200/$CF_3CO_2H$ (10/1) and the filtrate was thereafter incrassated at a reduced pressure to acquire 0.77 g (11.0%) of $HO_2CCF_2CF_2O(CF_2CF_2CF_2O)_{20}CF_2CF_2CO_2H$.

Example 28

7 g of a perfluoro(poly)ether carboxylic acid mixture represented by the average compositions of $CF_3CF_2CF_2O(CF_2CF_2CF_2O)_{20}CF_2CF_2CO_2H$, $HO_2CCF_2CF_2O(CF_2CF_2CF_2O)_{20}CF_2CF_2CO_2H$, and $CF_3CF_2CF_2O(CF_2CF_2CF_2O)_{20}CF_2CF_2CF_3$, 35 ml of perfluorohexane, and 20 g of silica gel (produced by Fuji Cilysia Chemical Ltd., PSQ-100B) were put in a 50-ml three-neck flask having a thermometer and a stirrer attached thereto and stirred at 25°C for 1 hour. The silica gel in the reaction liquid was thereafter filtered using Celite, and the silica gel was cleansed using 100 ml of perfluorohexane. The filtrate was incrassated at a reduced pressure to acquire 1.69 g (24.1%) of $CF_3CF_2CF_2O(CF_2CF_2CF_2O)_{20}CF_2CF_2CF_3$.

The silica gel was continuously cleansed using 100 ml of Novec(™) 7200/$CF_3CF_2CH_2OH$ (6/4). The filtrate was incrassated at a reduced pressure to acquire 4.89 g (69.8%) of $CF_3CF_2CF_2O(CF_2CF_2CF_2O)_{20}CF_2CF_2CO_2H$. The silica gel was finally cleansed using 100 ml of Novec(™) 7200/$CF_3CO_2H$ (20/1) and the filtrate was thereafter incrassated at a reduced pressure to acquire 0.40 g (5.7%) of $HO_2CCF_2CF_2O(CF_2CF_2CF_2O)_{20}CF_2CF_2CO_2H$.

Example 29

A solution formed by dissolving 10 g of a perfluoro(poly)ether group-containing compound represented by a chemical formula $CH_3OCOCF_2O\text{-}(CF_2CF_2O)_m\text{-}CF_2COOCH_3$ (in this formula, m=13 to 17, the number average molecular weight: 2,000) into 30 g of perfluorohexane, 3.3 mL of acetonitrile, and 33 mL of ion exchanged water were put in a 100-mL four-neck flask having a stirrer, a dripping funnel, a reflux condenser, and a thermometer attached thereto. The inside of the system was sufficiently substituted by nitrogen and the substances were stirred at 25°C for 0.5 hours. 15 mL (3.75 mmol) of sodium hydroxide aqueous solution prepared in advance to be 0.25 M was thereafter dripped using the dripping funnel. After the dripping came to an end, the substances were caused to react with each other at 25°C for 1 hour. After the reaction, a liquid separation operation was executed to fully distill the volatile portion at a reduced pressure to acquire 9.94 g of a mixture.

9.46 g of the acquired mixture was dissolved into 60 mL of perfluorohexane, and 30.75 g of silica gel (produced

by Fuji Cilysia Chemical Ltd.: PSQ 100B) was added thereto and stirred at 25°C for 1 hour to cause the silica gel to absorb. The silica gel in the reaction liquid was thereafter filtered using Celite, and the silica gel was cleansed using 200 ml of perfluorohexane. The filtrate was incrassated at a reduced pressure to acquire 3.84 g (40.6%) of $CH_3OCOCF_2O\text{-}(CF_2CF_2O)_m\text{-}CF_2COOCH_3$. The silica gel was continuously cleansed using 200 ml of Novec(™) 7200/$CF_3CH_2OH$ (6/4). The filtrate was thereafter incrassated at a reduced pressure to acquire 5.22 g (55.2%) of $CH_3OCOF_2O\text{-}(CF_2CF_2O)_m\text{-}CF_2CO_2H$. The silica gel was finally cleansed using 200 ml of Novec(™) 7200/$CF_3CO_2H$ (10/1) and the filtrate was thereafter incrassated at a reduced pressure to acquire 0.4 g (4.2%) of $HO_2CCF_2O\text{-}(CF_2CF_2O)_mCF_2CO_2H$.

Example 30

A mixture comprising 48.3% by mol of a compound (1a), 41.2% by mol of a compound (1b), and 10.5% by mol of a compound (1c) of the following average compositions were used in Examples below. The mixture was synthesized using a photo-oxidation reaction of tetrafluoroethylene, decomposition and methyl-esterification of a perfluoropolyether peroxide, fractionation by molecular distillation, synthesis of carboxylic acid at both ends using hydrolysis, and fluorination using a fluorine gas. The content ratio (a mol ratio) of each of the compounds was determined by executing silica gel isolation and using $^{19}F$-NMR.

Average Composition:

$$CF_3O(CF_2O)_n(CF_2CF_2O)_mCF_2CO_2H \qquad (1a)$$

$$HO_2C(CF_2O)_n(CF_2CF_2O)_mCF_2CO_2H \qquad (1b)$$

$$CF_3O(CF_2O)_n(CF_2CF_2O)_mCF_3 \qquad (1c)$$

(In Formulae, "n" and "m" are n=26 (the average value) and m=27 (the average value).)

Isolation Operation

13.36 g of a perfluoro(poly)ether carboxylic acid mixture represented by the average composition of $CF_3O(CF_2O)_n(CF_2CF_2O)_mCF_3$, $CF_3O(CF_2O)_n(CF_2CF_2O)_mCF_2CO_2H$, and $HO_2C(CF_2O)_n(CF_2CF_2O)_mCF_2CO_2H$, 50 ml of perfluorohexane, and 41.2 g of silica gel (produced by Fuji Cilysia Chemical Ltd., PSQ-100B) were put in a 50-ml three-neck flask having a stirrer attached thereto and stirred at 25°C for 1 hour. The silica gel in the reaction liquid was thereafter filtered using Celite, and the silica gel was cleansed using 200 ml of perfluorohexane. The filtrate was incrassated at a reduced pressure to acquire 1.40 g of $CF_3O(CF_2O)_n(CF_2CF_2O)_mCF_3$.

The silica gel was continuously cleansed using 300 ml of Novec(™) 7200/$CF_3CH_2OH$ (100/1). The filtrate was incrassated at a reduced pressure to acquire 0.82 g of a mixture comprising compounds of the average compositions at mol ratios of

$$CF_3O(CF_2O)_n(CF_2CF_2O)_mCF_2CO_2H:HO_2C(CF_2O)_n(CF_2CF_2O)_mCF_2CO_2H=99.8:0.2.$$

The silica gel was continuously cleansed using 1,000 ml of Novec(™) 7200/$CF_3CH_2OH$ (50/1), the silica gel was then cleansed using 300 ml of Novec(™) 7200/$CF_3CH_2OH$ (1/1), and the silica gel was finally cleansed using 500 ml of Novec(™) 7200/$CF_3CH_2OH$ (1/1). The final filtrate was incrassated at a reduced pressure to acquire 3.03 g of $HO_2C(CF_2O)n(CF_2CF_2O)_mCF_2CO_2H$.

Comparative Example 14

7 g of a perfluoropolyether carboxylic acid mixture used in Example 27, 35 ml of perfluorohexane, and 20 g of silica gel (produced by Fuji Cilysia Chemical Ltd., PSQ-100B) were put and stirred at 25°C for 1 hour. The silica gel in the reaction liquid was thereafter filtered using Celite, and the silica gel was cleansed using 300 ml of a mixture solution of HFE 7200/methanol=1/1. The cleansing liquid was incrassated to acquire 1.69 g (24.1%) of $CF_3CF_2CF_2O(CF_2CF_2CF_2O)_{20}CF_2CF_2CF_3$ while no perfluoropolyether carboxylic acid was eluted.

INDUSTRIAL APPLICABILITY

According to the present invention, the perfluoro(poly)ether group-containing monocarboxylic acid compound and/or the perfluoro(poly)ether group-containing dicarboxylic acid compound can excellently be isolated and extracted. The method of the present invention provides an industrial advantage that provision is enabled of the perfluoro(poly)ether group-containing monocarboxylic acid compound and/or the perfluoro(poly)ether group-containing dicarboxylic acid compound each in a purer form, that are highly useful in synthesizing perfluoro(poly)ether group-containing compounds having various structures.

## Claims

**1.** A method of

(a) isolating a compound of formula (1), and a compound of formula (2) or (3) from a mixture comprising the compound (1), and the compound (2) or (3); or
(b) isolating a compound of formula (1), a compound of formula (2) and a compound of formula (3) from a mixture comprising them:

$$A\text{-}(OCF_2)_a\text{-}(OC_2F_4)_b\text{-}(OC_3F_6)_c\text{-}(OC_4F_S)_d\text{-}A \quad (1)$$

$$A\text{-}(OCF_2)_a\text{-}(OC_2F_4)_b\text{-}(OC_3F_6)_c\text{-}(OC_4F_8)_d\text{-}z \quad (2)$$

$$Z\text{-}(OCF_2)_a\text{-}(OC_2F_4)_b\text{-}(OC_3F_6)_c\text{-}(OC_4F_8)_d\text{-}Z \quad (3)$$

wherein

A each independently is $R^1$O-CO-W-, $R^1$O-CO-W-O-, HO-W-, HO-W-O-, $R^1$-O-W-, V-, or V-O-, wherein

$R^1$ is alkyl,
W is a bond or a divalent $C_{1-4}$-organic group,
V is $C_{1-16}$-perfluoroalkyl or $-(CF_2)_g-CF_2H$ wherein g is an integer of 0-15,

Z is -X-Y or -O-X-Y wherein X is a bond or a divalent $C_{1-4}$-organic group, and Y is a carboxylic acid group,
a, b, c, and d each independently are an integer of 0-200 and $(a+b+c+d) \geq 1$,
and each of repeating units enclosed in parentheses with a, b, c or d added thereto is present in arbitrary order in the formula;

which method comprises the steps of:

(i) mixing the mixture with

- a F-containing nonpolar solvent, and
- a polar stationary phase selected from aluminum oxide, silica gel, magnesium oxide, aluminum silicate, magnesium silicate, chemically modified silica gel, and diatom earth;

(ii) isolating the compound (1) from the polar stationary phase using a nonpolar mobile phase comprising one or more F-containing nonpolar solvent(s); and
(iii) isolating

- in the case of (a) above, the compound (2) or (3), or
- in the case of (b) above, the compound (2) and then the compound (3),

from the polar stationary phase using a polar mobile phase comprising one or more F-containing polar solvent(s), a combination of a F-containing nonpolar solvent and a F-containing polar solvent, or a combination of a F-containing nonpolar solvent and a fluorine-free polar solvent, wherein the fluorine-free polar solvent comprises one or more solvent(s) selected from a carboxylic acid solvent and a sulfonic acid solvent.

2. The method of claim 1, wherein the Rf value of the compound (2) is ≥ 0.1 when the compound (2) is developed using the polar mobile phase as a developing solvent by thin layer chromatography using silica gel as a carrier.

3. The method of claim 1, wherein the Rf value of the compound (3) is ≥ 0.1 when the compound (3) is developed using the polar mobile phase as a developing solvent by thin layer chromatography using silica gel as a carrier.

4. The method of any of claims 1-3, wherein the polar mobile phase is one or more F-containing polar solvent(s) or a combination of a F-containing nonpolar solvent and a F-containing polar solvent.

5. The method of any of claims 1-4, wherein in Formulae (1)-(3), $R^1$ is $C_{1-4}$-alkyl, and W and X each independently are a bond, $C_{1-4}$-alkylene, $C_{1-4}$-fluoroalkylene, or $C_{1-4}$-perfluoroalkylene.

6. The method of any of claims 1-5, wherein in formulae (1)-(3) ($a+b+c+d$) is 5-200.

7. The method of any of claims 1-6, wherein the group $-(OCF_2)_a-(OC_2F_4)_b-(OC_3F_6)_c-(OC_4F_8)_d-$ in Formulae (1) - (3) has an average molecular weight of 500-100,000.

8. The method of any of claims 1-7, wherein the F-containing nonpolar solvent comprises one or more solvent(s) selected from chlorofluorocarbon, hydrochlorofluorocarbon, hydrofluoromonoether, perfluoromonoether, perfluoroalkane, hydrofluoroalkane, perfluoropolyether, perfluoroamine, a F-containing alkene, a F-containing aromatic solvent, a F-containing ketone, and a F-containing ester.

9. The method of claim 8, wherein the boiling point of the F-containing nonpolar solvent is in the range of 20-200°C.

10. The method of any of claims 1-9, wherein the F-containing polar solvent comprises one or more solvent(s) selected from a F-containing alcohol, a F-containing carboxylic acid, and a F-containing sulfonic acid.

11. The method of claim 10, wherein the boiling point of the F-containing polar solvent is in the range of 20-200°C.

12. A method of isolating a compound of formula (1) as defined in claim 1 and a compound of formula (2) as defined in claim 1 from a mixture comprising them, which method comprises the steps of:
mixing at least one solvent selected from fluorine atom-containing nonpolar solvents, the mixture, and a polar stationary phase with each other; and

(i) mixing the mixture with

- at least one F-containing nonpolar solvent, and
- a polar stationary phase selected from aluminum oxide, silica gel, magnesium oxide, aluminum silicate, magnesium silicate, chemically modified silica gel, and diatom earth;

(ii) isolating the compound (1) and then the compound (2) from the polar stationary phase using at least one solvent selected from a F-containing ketone and a F-containing ester.

13. The method of any of claims 1-12, wherein the mixture is a mixture acquired by hydrolyzing, in the presence of an aqueous solution comprising an alkaline metal hydroxide, a perfluoro(poly)ether group-containing compound of formula (1'):

$$A-(OCF_2)_a-(OC_2F_4)_b-(OC_3F_6)_c-(OC_4F_8)_d-A \qquad (1')$$

wherein

A each independently is $R^1O-CO-W-$, $R^1O-CO-w-O-$, wherein

$R^1$ is alkyl,
W is a bond or a divalent $C_{1-4}$-organic group,

*a*, *b*, *c*, and *d* each independently are an integer of 0-200 and ($a+b+c+d$) ≥ 1,
and each of repeating units enclosed in parentheses with *a*, *b*, *c* or *d* added thereto is present in arbitrary order

in the formula.

## Patentansprüche

**1.** Verfahren zum

(a) Isolieren einer Verbindung der Formel (1) und einer Verbindung der Formel (2) oder (3) aus einem Gemisch, das die Verbindung (1) und die Verbindung (2) oder (3) umfasst; oder
(b) Isolieren einer Verbindung der Formel (1), einer Verbindung der Formel (2) und einer Verbindung der Formel (3) aus einem Gemisch, das diese umfasst:

$$A\text{-}(OCF_2)_a\text{-}(OC_2F_4)_b\text{-}(OC_3F_6)_c\text{-}(OC_4F_8)_d\text{-}A \qquad (1)$$

$$A\text{-}(OCF_2)_a\text{-}(OC_2F_4)_b\text{-}(OC_3F_6)_c\text{-}(OC_4F_8)_d\text{-}Z \qquad (2)$$

$$Z\text{-}(OCF_2)_a\text{-}(OC_2F_4)_b\text{-}(OC_3F_6)_c\text{-}(OC_4F_8)_d\text{-}Z \qquad (3)$$

worin

A jeweils unabhängig voneinander für $R^1$O-CO-W-, $R^1$O-CO-W-O, HO-W-, HO-W-O-, $R^1$-O-W, V-, oder V-O- steht, worin

$R^1$ für Alkyl steht,
W für eine Bindung oder eine zweiwertige organische $C_{1-4}$-Gruppe steht,
V für $C_{1-16}$-Perfluoralkyl oder $-(CF_2)_g-CF_2H$ steht, worin g für eine ganze Zahl von 0-15 steht,

Z für -X-Y oder -O-X-Y steht, worin X für eine Bindung oder eine zweiwerte organische $C_{1-4}$-Gruppe steht und Y für eine Carbonsäuregruppe steht,
a, b, c und d jeweils unabhängig voneinander für eine ganze Zahl von 0-200 stehen und $(a+b+c+d) \geq 1$ ist, und jede der Wiederholungseinheiten in den Klammern, an die a, b, c oder d hinzugefügt sind, in beliebiger Reihenfolge in der Formel vorliegen;

wobei das Verfahren die folgenden Schritte umfasst:

(i) Mischen des Gemischs mit

- einem F-haltigen unpolaren Lösungsmittel und
- einer polaren stationären Phase, ausgewählt aus Aluminiumoxid, Silicagel, Magnesiumoxid, Aluminiumsilicat, Magnesiumsilicat, chemisch modifiziertem Silicagel und Kieselgur;

(ii) Isolieren der Verbindung (1) aus der polaren stationären Phase unter Verwendung einer unpolaren mobilen Phase, umfassend eines oder mehrere F-haltige unpolare Lösungsmittel; und
(iii) Isolieren

- im obigen Fall (a), die Verbindung (2) oder (3); oder
- im obigen Fall (b), die Verbindung (2) und anschließend die Verbindung (3)

aus der polaren stationären Phase unter Verwendung einer polaren mobilen Phase, umfassend eines oder mehrere F-haltige polare Lösungsmittel, eine Kombination aus einem F-haltigen unpolaren Lösungsmittel und einem F-haltigen polaren Lösungsmittel oder eine Kombination aus einem F-haltigen unpolaren Lösungsmittel einem Fluor-freien polaren Lösungsmittel, wobei das Fluor-freie polare Lösungsmittel eines oder mehrere Lösungsmittel umfasst, ausgewählt aus einem Carbonsäurelösungsmittel und einem Sulfonsäurelösungsmittel.

**2.** Verfahren gemäß Anspruch 1, wobei der Rf-Wert der Verbindung (2) $\geq$ 0,1 ist, wenn die Verbindung (2) unter Verwendung der polaren mobilen Phase als Entwicklungslösungsmittel mittels Dünnschichtchromatographie unter Verwendung von Silicagel als Träger entwickelt wird.

3. Verfahren gemäß Anspruch 1, wobei der Rf-Wert der Verbindung (3) $\geq$ 0,1 ist, wenn die Verbindung (3) unter Verwendung der polaren mobilen Phase als Entwicklungslösungsmittel mittels Dünnschichtchromatographie unter Verwendung von Silicagel als Träger entwickelt wird.

4. Verfahren gemäß einem der Ansprüche 1 bis 3, wobei die polare mobile Phase eines oder mehrere F-haltige polare Lösungsmittel oder eine Kombination aus einem F-haltigen unpolaren Lösungsmittel und einem F-haltigen polaren Lösungsmittel ist.

5. Verfahren gemäß einem der Ansprüche 1 bis 4, wobei in den Formeln (1) bis (3) $R^1$ für $C_{1-4}$-Alkyl steht und W und X jeweils unabhängig voneinander für eine Bindung, $C_{1-4}$-Alkylen, $C_{1-4}$-Fluoralkylen oder $C_{1-4}$-Perfluoralkylen stehen.

6. Verfahren gemäß einem der Ansprüche 1 bis 5, wobei in den Formeln (1) bis (3) (a+b+c+d) gleich 5-200 ist.

7. Verfahren gemäß einem der Ansprüche 1 bis 6, wobei das mittlere Molekulargewicht der Gruppe $-(OCF_2)_a-(OC_2F_4)_b-(OC_3F_6)_c-(OC_4F_8)_d-$ in den Formeln (1) bis (3) 500 bis 100.000 beträgt.

8. Verfahren gemäß einem der Ansprüche 1 bis 7, wobei das F-haltige unpolare Lösungsmittel eines oder mehrere Lösungsmittel umfasst, ausgewählt aus der Gruppe bestehend aus Chlorfluorkohlenstoff, Chlorfluorkohlenwasserstoff, Hydrofluormonoether, Perfluormonoether, Perfluoralkan, Hydrofluoralkan, Perfluorpolyether, Perfluoramin, einem F-haltigen Alken, einem F-haltigen aromatischen Lösungsmittel, einem F-haltigen Keton und einem F-haltigen Ester.

9. Verfahren gemäß Anspruch 8, wobei der Siedepunkt des F-haltigen unpolaren Lösungsmittels im Bereich von 20-200°C liegt.

10. Verfahren gemäß einem der Ansprüche 1 bis 9, wobei das F-haltige polare Lösungsmittel eines oder mehrere Lösungsmittel umfasst, ausgewählt aus der Gruppe bestehend aus einem F-haltigen Alkohol, einer F-haltigen Carbonsäure und einer F-haltigen Sulfonsäure.

11. Verfahren gemäß Anspruch 10, wobei der Siedepunkt des F-haltigen polaren Lösungsmittels im Bereich von 20-200°C liegt.

12. Verfahren zum Isolieren einer wie in Anspruch 1 definierten Verbindung der Formel (1) und einer wie in Anspruch 1 definierten Verbindung der Formel (2) aus einem Gemisch, das diese umfasst,
wobei das Verfahren die folgenden Schritte umfasst:
Mischen von mindestens einem Lösungsmittel, ausgewählt aus fluoratomhaltigen unpolaren Lösungsmitteln, dem Gemisch und einer polaren stationären Phase miteinander; und

(i) Mischen des Gemischs mit

- mindestens einem F-haltigen unpolaren Lösungsmittel und
- einer polaren stationären Phase, ausgewählt aus Aluminiumoxid, Silicagel, Magnesiumoxid, Aluminiumsilicat, Magnesiumsilicat, chemisch modifiziertem Silicagel und Kieselgur;

(ii) Isolieren der Verbindung (1) und anschließend der Verbindung (2) aus der polaren stationären Phase unter Verwendung von mindestens einem Lösungsmittel, ausgewählt aus einem F-haltigen Keton und einem F-haltigen Ester.

13. Verfahren gemäß einem der Ansprüche 1 bis 12, wobei das Gemisch ein Gemisch ist, das durch Hydrolysieren der Verbindung mit Perfluor(poly)ethergruppen der Formel (1') in Gegenwart einer wässrigen Lösung, die ein Alkalimetallhydroxid umfasst, erhalten wird.

$$A-(OCF_2)_a-(OC_2F_4)_b-(OC_3F_6)_c-(OC_4F_8)_d-A \qquad (1')$$

worin

A jeweils unabhängig voneinander für $R^1O-CO-W-$, $R^1O-CO-W-O$ steht, worin

$R^1$ für Alkyl steht,
W für eine Bindung oder eine zweiwertige organische $C_{1-4}$-Gruppe steht,
a, b, c und d jeweils unabhängig voneinander für eine ganze Zahl von 0-200 stehen und (a+b+c+d) ≥ 1 ist,

und jede der Wiederholungseinheiten in den Klammern, an die a, b, c oder d hinzugefügt sind, in beliebiger Reihenfolge in der Formel vorliegen.

## Revendications

**1.** Procédé de

(a) l'isolement d'un composé de formule (1), et d'un composé de formule (2) ou (3) à partir d'un mélange comprenant le composé (1), et le composé (2) ou (3) ; ou
(b) l'isolement d'un composé de formule (1), d'un composé de formule (2) et d'un composé de formule (3) à partir d'un mélange les comprenant :

$$A\text{-}(OCF_2)_a\text{-}(OC_2F_4)_b\text{-}(OC_3F_6)_c\text{-}(OC_4F_8)_d\text{-}A \qquad (1)$$

$$A\text{-}(OCF_2)_a\text{-}(OC_2F_4)_b\text{-}(OC_3F_6)_c\text{-}(OC_4F_8)_d\text{-}Z \qquad (2)$$

$$Z\text{-}(OCF_2)_a\text{-}(OC_2F_4)_b\text{-}(OC_3F_6)_c\text{-}(OC_4F_8)_d\text{-}Z \qquad (3)$$

dans lequel

A représente, chacun indépendamment, $R^1$O-CO-W-, $R^1$O-CO-W-O-, HO-W-, HO-W-O-, $R^1$-O-W-, V-, ou V-O-, dans lequel
$R^1$ représente un groupe alkyle,
W représente une liaison ou un groupe organique bivalent en $C_1$ à $C_4$,
V représente un groupe perfluoroalkyle en $C_1$ à $C_{16}$ ou $-(CF_2)_g-CF_2H$ dans lequel *g* est un nombre entier de 0 à 15,
Z représente -X-Y ou -O-X-Y dans lequel X représente une liaison ou un groupe organique bivalent en $C_1$ à $C_4$, et Y représente un groupe acide carboxylique,
*a*, *b, c*, et *d* sont chacun indépendamment un nombre entier de 0 à 200 et (*a*+*b*+*c*+*d*) > 1,
et chacune des unités répétitives entre parenthèses avec *a*, *b, c* ou *d* ajoutés à celles-ci est présente dans un ordre arbitraire dans la formule ;

lequel procédé comprend les étapes de :

(i) le mélange du mélange avec

- un solvant non polaire contenant F, et
- une phase stationnaire polaire choisie parmi l'oxyde d'aluminium, le gel de silice, l'oxyde de magnésium, le silicate d'aluminium, le silicate de magnésium, le gel de silice chimiquement modifié, et la terre de diatomée ;

(ii) l'isolement du composé (1) à partir de la phase stationnaire polaire en utilisant une phase mobile non polaire comprenant un ou plusieurs solvants non polaires contenant F ; et
(iii) l'isolement

- dans le cas de (a) ci-dessus, du composé (2) ou (3), ou
- dans le cas de (b) ci-dessus, du composé (2) et ensuite du composé (3),

à partir de la phase stationnaire polaire en utilisant une phase mobile polaire comprenant un ou plusieurs solvants polaires contenant F, une combinaison d'un solvant non polaire contenant F et d'un solvant polaire contenant F, ou une combinaison d'un solvant non polaire contenant F et d'un solvant polaire dépourvu de fluor, dans lequel le solvant polaire dépourvu de fluor comprend un ou plusieurs solvants choisis parmi un solvant d'acide carboxylique et un solvant d'acide sulfonique.

**2.** Procédé selon la revendication 1, dans lequel la valeur Rf du composé (2) est ≥ 0,1 lorsque le composé (2) est développé en utilisant la phase mobile polaire en tant que solvant de développement par chromatographie sur couche mince en utilisant du gel de silice comme support.

**3.** Procédé selon la revendication 1, dans lequel la valeur Rf du composé (3) est ≥ 0,1 lorsque le composé (3) est développé en utilisant la phase mobile polaire en tant que solvant de développement par chromatographie sur couche mince en utilisant du gel de silice comme support.

**4.** Procédé selon l'une quelconque des revendications 1 à 3, dans lequel la phase mobile polaire consiste en un ou plusieurs solvants polaires contenant F ou une combinaison d'un solvant non polaire contenant F et d'un solvant polaire contenant F.

**5.** Procédé selon l'une quelconque des revendications 1 à 4, dans lequel dans les formules (1) à (3), $R^1$ représente un groupe alkyle en $C_1$ à $C_4$, et W et X représentent chacun indépendamment une liaison, un groupe alkylène en $C_1$ à $C_4$, fluoroalkylène en $C_1$ à $C_4$, ou perfluoroalkylène en $C_1$ à $C_4$.

**6.** Procédé selon l'une quelconque des revendications 1 à 5, dans lequel dans les formules (1) à (3), ($a$+$b$+$c$+$d$) vaut 5 à 200.

**7.** Procédé selon l'une quelconque des revendications 1 à 6, dans lequel le groupe $-(OCF_2)_a-(OC_2F_4)_b-(OC_3F_6)_c-(OC_4F_8)_d-$ dans les formules (1) à (3) a une masse moléculaire moyenne en poids de 500 à 100 000.

**8.** Procédé selon l'une quelconque des revendications 1 à 7, dans lequel le solvant non polaire contenant F comprend un ou plusieurs solvants choisis parmi des chlorofluorocarbone, hydrochlorofluorocarbone, hydrofluoromonoéther, perfluoromonoéther, perfluoroalcane, hydrofluoroalcane, perfluoropolyéther, perfluoroamine, un alcène contenant F, un solvant aromatique contenant F, une cétone contenant F, et un ester contenant F.

**9.** Procédé selon la revendication 8, dans lequel le point d'ébullition du solvant non polaire contenant F se situe dans la plage de 20 à 200°C.

**10.** Procédé selon l'une quelconque des revendications 1 à 9, dans lequel le solvant polaire contenant F comprend un ou plusieurs solvants choisis parmi un alcool contenant F, un acide carboxylique contenant F, et un acide sulfonique contenant F.

**11.** Procédé selon la revendication 10, dans lequel le point d'ébullition du solvant polaire contenant F se situe dans la plage de 20 à 200°C.

**12.** Procédé d'isolement d'un composé de formule (1) tel que défini dans la revendication 1 et d'un composé de formule (2) tel que défini dans la revendication 1 à partir d'un mélange les comprenant,
lequel procédé comprend les étapes de :
le mélange d'au moins un solvant choisi parmi des solvants non polaires contenant des atomes de fluor, du mélange, et d'une phase stationnaire polaire avec chacun ; et

(i) le mélange du mélange avec

- au moins un solvant non polaire contenant F, et
- une phase stationnaire polaire choisie parmi l'oxyde d'aluminium, le gel de silice, l'oxyde de magnésium, le silicate d'aluminium, le silicate de magnésium, le gel de silice chimiquement modifié, et la terre de diatomée ;

(ii) l'isolement du composé (1) et ensuite du composé (2) à partir de la phase stationnaire polaire en utilisant au moins un solvant choisi parmi une cétone contenant F et un ester contenant F.

**13.** Procédé selon l'une quelconque des revendications 1 à 12, dans lequel le mélange est un mélange acquis par hydrolyse, en présence d'une solution aqueuse comprenant un hydroxyde de métal alcalin, un composé contenant un groupe perfluoro(poly)éther de formule (1') :

$$A\text{-}(OCF_2)_a\text{-}(OC_2F_4)_b\text{-}(OC_3F_6)_c\text{-}(OC_4F_8)_d\text{-}A \qquad (1')$$

dans lequel

A représente, chacun indépendamment, $R^1$O-CO-W-, $R^1$O-CO-W-O-, dans lequel
$R^1$ représente un groupe alkyle,
W représente une liaison ou un groupe organique bivalent en $C_1$ à $C_4$,
*a*, *b, c*, et *d* sont chacun indépendamment un nombre entier de 0 à 200 et $(a+b+c+d) > 1$,
et chacune des unités répétitives entre parenthèses avec *a*, *b, c* ou *d* ajoutés à celles-ci est présente dans un ordre arbitraire dans la formule.

[Fig. 1]

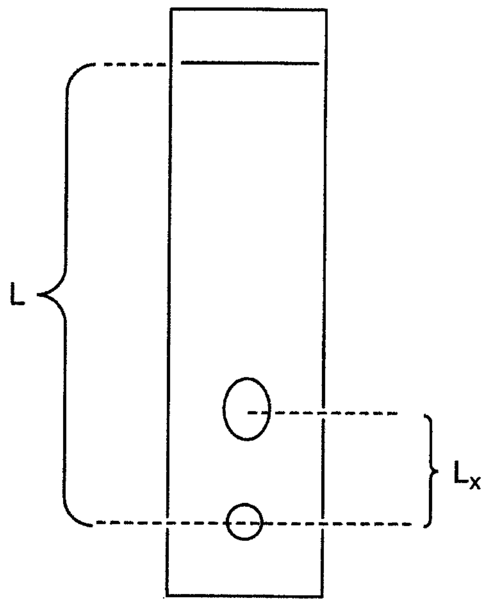

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6145339 A
- US 5262057 A
- JP 6145340 A
- US 5246588 A
- JP 10077341 A
- US 5910614 A
- JP 2006022334 A
- EP 1614703 A
- WO 2009532432 A
- WO 2013060658 A